(19) Europäisches Patentamt
European Patent Office
Office européen des brevets

(11) EP 2 278 548 A1

(12) **EUROPEAN PATENT APPLICATION**

(43) Date of publication:
**26.01.2011 Bulletin 2011/04**

(51) Int Cl.:
**G06T 7/00** (2006.01)

(21) Application number: **09009436.8**

(22) Date of filing: **21.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Karlsruher Institut für Technologie 76131 Karlsruhe (DE)**

(72) Inventor: **Reischl, Markus 76227 Karlsruhe (DE)**

(74) Representative: **Müller-Boré & Partner Patentanwälte Grafinger Straße 2 81671 München (DE)**

(54) **Analysis of embryo images**

(57)     Summarizing, the present application relates to a computerimplemented method for automatically analysing a set of E digital embryo images $e_i$ with the following steps:

- obtaining the set of E digital embryo images $e_i$, where E is a natural number,
- for each digital embryo image $e_i$ of the set of E digital embryo images:

-- identifying L landmarks $l_{ij}$ (26) in the digital embryo image $e_i$, wherein L is a natural number,
-- warping the digital embryo image $e_i$ by translating the position of each landmark $l_{ij}$ (26) in the digital embryo image $e_i$ into a position of a corresponding reference landmark $rl_j$ (28) of a reference embryo image re, and
-- evaluating the pixel values of the warped digital embryo image $e_i$, as well as a computer program product and a system.

Figure 1

EP 2 278 548 A1

**Description**

The present application relates to a computer implemented method, a computer program product and a system.

In experimental biology, in particular in molecular biology, zebrafish (Danio rerio) have been widely used for experiments regarding genomic structure, impact of toxic materials, etc. Zebrafish are particularly suitable for such experiments, since zebrafish embryos provide a unique combination of high throughput capabilities and the organismal complexity of the vertebrate animal for a variety of phenotype screen applications. Part of the high success and use of zebrafish is based on that they are small in size, develop outside of the mother and are mostly transparent. In addition, zebrafish allow cheap maintenance of the adult zebrafish.

For that reason, applications have been developed, which allow breeding and manipulating of a large number of zebrafish. As an example, semi-automatic or even fully-automatic methods and systems have been developed, which allow injection of genomic sequences, toxines, etc. in a large number of zebrafish. In addition, specific vessels, such as transparent cassettes for individually maintaining a large number of zebrafish and obtaining digital images of the individual zebrafish have been developed.

Hence, it is an object of the present application, to provide an automatic analysis of a large number of zebrafish embryos. This object is solved by the independent claims. Exemplary embodiments are subject to the dependent claims.

Computer implemented method according to an aspect

An aspect of the present application relates to a computer implemented method for automatically analysing a set of E digital embryo images $e_i$ with the following steps:

- obtaining the set of E digital embryo images $e_i$, where E is a natural number,

- for each digital embryo image $e_i$ of the set of E digital embryo images:

 - - identifying L landmarks $l_{ij}$ in the digital embryo image $e_i$, wherein L is a natural number,
 - - warping the digital embryo image $e_i$ by translating the position of each landmark $l_{ij}$ in the digital embryo image $e_i$ (in the coordinate system of the digital embryo image) into a position (in the coordinate system of the digital embryo image) of a corresponding reference landmark $rl_j$ of a reference embryo image re, and
 - - evaluating the pixel values of the warped digital embryo image $e_i$.

The embryo may particularly be a non-human embryo, in particular an animal embryo such as a zebrafish (Danio rerio) embryo.

E is a natural number. As an example, E may be the number of digital embryo images obtained from one stack or cassette of digital embryos, such as 92 digital embryo images. E may also be the number of digital embryo images obtained during a day such as 5000, 10 000, 15 000, 20 000, etc. digital embryo images. In the present application, $i = 1 ... E$.

L is a natural number. L represents the number of landmarks in a digital image. L may be 64 landmarks. L may be in the range between 5 to 500 landmarks, in particular between 20 to 80 landmarks. Depending on the computation resources available, L may substantially deviate, in particular be substantially larger than 100. In the present application, $j = 1 ... L$.

Advantageously, the computer implemented method according to the present application allows to evaluate a large number of digital embryo images due to the warping (i.e. application of the warp function) of each of the digital embryo images $e_i$. This warping provides, that specific points of each embryo in the respective digital embryo image are located on identical positions for each of the digital embryo images. In other words, the landmarks may be points of interest of the embryo and by warping the landmarks in each of the digital embryo images it is provided that for each digital embryo image $e_i$ the respective landmarks are located at identical positions in the respective coordinate systems of the individual digital embryo images $e_i$.

As an example, a landmark $rl_1$ of the reference embryo image re may be located at a position (1, 1) in the coordinate system of the reference embryo image re. After warping a first digital embryo image $e_1$, the respective landmark $l_{11}$ of the first digital embryo image $e_1$ is also located at the position (1, 1) in the coordinate system of the digital embryo image $e_1$. Accordingly, after warping a second digital embryo image $e_2$, the landmark $l_{21}$ is located at the position (1, 1) within the coordinate system of the warped digital embryo image $e_2$. The above applies in a similar manner for the remaining landmarks of the digital embryo image $e_1$ and the digital embryo image $e_2$, and the warped digital embryo image $e_1$ and warped the digital embryo image $e_2$.

Since the digital embryo images $e_i$ and the reference embryo image re preferably have the same size in pixels, e.g. 549 x 359 pixels and due to the identical definition of the origin of the coordinate systems in each image, e.g. in the upper left corner of each image, it is provided, that even though embryos in individual digital embryo images $e_i$ might have different shapes, i.e. different outlines, different sizes, different organ size and position, etc., after warping the digital embryo images $e_i$, the respective regions of the individual embryos are arranged substantially identical since the landmarks are arranged at identical positions. Hence, this allows an easy and reliable analysis of the digital image data, in particular and easy and reliable comparison of the information provided in each digital embryo image $e_i$.

Landmarks in the sense of the present application may also be referred to as a point or points, wherein a point not necessarily needs to be a point in the mathematical sense but may be an area comprising one or more pixels. Nevertheless, a landmark can be represented by a single pixel in a digital image, such as a digital embryo image or a reference embryo image, which is also a digital image.

The term reference landmark, as used in the present application includes a landmark in the reference embryo image.

The term warping as used in the present application may include distorting and/or rotating, i.e. a distortion function and/or a rotating function. In other words, warping may be a function that maps a digital embryo image on the reference embryo image. As an example, if an embryo in a digital embryo image has a head smaller than and a tail longer than a head and a tail of a reference embryo in a reference embryo image, by warping the digital embryo image the head of the embryo in the digital embryo image may be increased in size and the tail may be shortened. Accordingly, it may be possible that the physical relations of specific portions, e.g. spatial relations, including area ratios, of the embryo might be distorted by the warping. However, after the warping, the landmarks in the digital embryo image are at identical positions with respect to the coordinate system of the digital embryo image as are the landmarks of the reference embryo in the reference embryo image. A known spatial relationship of elements in the reference embryo image with respect to the reference landmarks may be applied to the digital embryo image due to the known spatial relationship of the landmarks in the digital embryo image and since the landmarks in both, the reference embryo image and the digital embryo image have identical positions.

Therefore, warping may include that the size and the shape of an embryo in the digital embryo image is changed. Hence, warping may include applying interpolation when e.g. the embryo in the initial, non-warped digital embryo image has a smaller size as compared to the embryo in the warped digital embryo image.

In particular, in the context of the present application, the warp function may also be referred to as a warp field, a deformation field, registering function, etc.

The term identifying L landmarks may be a semi-automatic or a fully automatic process. In particular, the landmarks in a digital embryo image may be identified completely automatically by use of computer aided image processing. The process may also include that landmarks that have been obtained by computer aided image processing may be corrected by a user manually. It may also include that single landmarks may be introduced by the user manually e.g. by a pointing device, such as a mouse, a pointer, etc. I may also be that one or more landmarks a predefined, thereby defining a specific point in each digital embryo image. The same applies for the reference landmarks, which may also be identified semi-automatically or fully-automatically. The reference landmarks may even be defined entirely manually.

Identifying the landmarks may also include to use in an initial step a digital embryo image and obtain the landmarks using image processing method(s) as described below. Hence when landmarks are available, the term identifying landmarks, as used ion the context of the present application, may also include applying these locations to the digital embryo image that should be warped. In other words, these landmarks are assigned to the digital embryo image that should be warped.

The term digital embryo image, as used in the present application may include that a digital embryo image defines an individual image. In other words, an individual image is provided for each embryo image to be processed. It may also be possible, that there is provided a large digital image comprising many digital embryo images. In such an example, a digital embryo image may be a section of a digital image.

The term digital embryo image, as used in the present application may include that the digital embryo image is constructed from an number of digital embryo images of the same embryo. For example, four images may be obtained at different focal planes along a specifically oriented direction, e.g. a direction perpendicular to the focal plane. These images may be combined by an extended focus algorithm to provide a digital embryo image $e_i$. Moreover, a digital embryo image may be a bright field image, a CFP-image, an YFP-image, or a combination thereof. It may also be possible, that a digital embryo image may be based on an initial image which is then further processed, such as cropped, inverted, reflected, etc. A digital embryo image may be obtained by a microscope. Hence a digital embryo image may also be referred to as a digital microscope embryo image.

The term corresponding as used in this application includes that e.g. the reference embryo image comprises a number of landmarks and each digital embryo image comprises a number of landmarks. Each landmark in the digital embryo image has a respective counterpart in each other digital embryo image as well as in the reference embryo image. As an example, the correspondence can be obtained by giving each landmark an individual identification number and/or a position in an array in computer code, etc. The correspondence can be obtained by assigning a landmark to a specific position of the embryo. An example, 64 landmarks may be provided, wherein in each digital image, i.e. in each digital embryo image as well as in the reference embryo image landmark 1 represents the end of the cerebellum of the embryo, landmark 2 represents the left most point of the head, etc. Hence, although the position, i.e. the x-coordinate and the y-coordinate of landmark 1 may be different from digital embryo image to digital embryo image in the respective coordinate system, after warping the digital embryo images, landmark 1 has an identical x-coordinate and y-coordinate in each warped digital embryo image, given that the origins of the coordinate systems are identical, e.g. in the upper left corner of the respective digital embryo image and reference embryo image.

The term evaluating as used in the present application may include that specific pixel values, i.e. intensity values and/or color values of specific pixels are obtained. These values may be processed which may include adding, subtracting one or more different values, multiplying with or by one or more different values or dividing other values or dividing by other values obtained within the same image or from other images. For details of evaluation and results of evaluation, reference is made to the detailed figure description.

Obtaining the digital embryo image may include capturing the digital embryo image using a capturing device, such as a digital camera and/or a scanner, etc. Obtaining the digital embryo image may include to retrieve the digital embryo image from a database.

Embodiments of the computer implemented method

In an example, the method may comprise the step of defining a warp function by translating the position of each landmark $l_{ij}$ in a digital embryo image $e^c_i$ (in the coordinate system of the digital embryo image) into a position (in the coordinate system of the digital embryo image) of a corresponding reference landmark $rl_j$ of a reference embryo image $re$.

In other words, the digital embryo image $e^c_i$ may be a CFP-image of an embryo which is used in order to obtain the landmark $l_{ij}$ therefrom. Although the digital embryo image $e^c_i$ may also be evaluated, it is possible, that the digital embryo image $e^c_i$ may only be used for determining the landmarks $l_{ij}$. Accordingly, for a given embryo, there may exist a digital embryo image $e^c_i$ and there may also exist one or more digital embryo image(s) $e^y_i$, which should be evaluated. The digital embryo image $e^y_i$, however, may not be suitable to define/obtain the landmarks. Rather, it may be possible that the landmarks obtained for the digital embryo image $e^c_i$ are applied also for the digital embryo image $e^y_i$ in order to evaluate the pixel values of said digital embryo image $e^y_i$.

Hence, the set of E digital embryo images $e_i$ may include the digital embryo images $e^c_i$ and the digital embryo images $e^y_i$. The digital embryo image(s) $e^y_i$ may include a YFP-image of said embryo and/or further fluorescence digital images and/or other digital images to be evaluated. The digital embryo image $e^y_i$ to which the warp function is applied, i.e. which is warped by the warp function, may also be referred to as digital embryo fluorescence image $e^y_i$.

Hence, the set of E digital embryo images may contain a subset of $E^c$ digital embryo images $e^y_i$ and a subset of $E^y$ digital embryo images $e^y_i$ which are used for evaluation. In other words, for one embryo, there may exist one digital embryo image $e^c_i$ that is used for identifying the warp function. For this embryo there may also exist a plurality, e,g, 2, 3, 4, 5, 10, 20 digital embryo images $e^c_i$, for example a CFP-image and a bright field image. For this embryo there may also exist a plurality, e,g, 2, 3, 4, 5, 10, 20 digital embryo images $e^y_i$ that are evaluated, i.e. to which the warp field is applied, i.e. that are warped.

Hence, this description may apply for the digital embryo image $e^c_i$ and similarly for the digital embryo images (s) $e^y_i$, where applicable.

Summarizing, when landmarks are defined in a digital embryo image $e^c_i$, said landmarks also are applied for the digital embryo images(s) $e^y_i$ of said embryo. Typically, a digital embryo image $e^c_i$ and digital embryo images(s) $e^y_i$ have same sizes in pixel and/or same orientation of the embryo in the image, same coordinate system definition, etc. Hence it may be that in digital embryo images(s) $e^y_i$ of an embryo the embryo may not be visible in its entirety but only parts of the embryo. However, since from the corresponding digital embryo image $e^c_i$ the position of the embryo is known, as well as the positions of the landmarks, the positions may be applied to the digital embryo images(s) $e^y_i$, since the spatial relationship of the embryo in the digital embryo image $e^c_i$ is identical for the digital embryo images(s) $e^y_i$. In other words, when the location of the embryo in the digital embryo image $e^c_i$ is derived, said location is also applicable to the digital embryo images(s) $e^y_i$ for the same embryo.

As an example, identifying the L landmarks $l_{ij}$ in a digital embryo image $e_i$ comprises for that digital embryo image $e_i$:

- identifying a head and a tail of the embryo,

- reducing the digital embryo image $e_i$ to a rectangle containing the head and the tail of the embryo, and

- adjusting the position of the embryo by rotating and/or reflecting the digital embryo image $e_i$, so that for/in all digital embryo images $e_i$ of the set of E digital embryo images the embryos are oriented substantially identically.

This method step may be applicable for each digital embryo image $e_i$ of the digital embryo images $e_i$, in particular each all digital embryo image $e^c_i$.

According to the present application, identifying a head and a tail of the embryo may be included in identifying an initial outline of the embryo. Accordingly, identifying an initial outline may be part of identifying a head and a tail of the embryo.

Identifying a head and a tail of the embryo includes identifying the pixel or identifying the neighbouring pixels which represent a head of the embryo in the digital embryo image. Accordingly, identifying a tail of the embryo includes identifying the pixel or identifying the neighbouring pixels which form or represent the tail of the embryo in the digital embryo image. Identifying a head and/or a tail may particularly be carried out by using a specific image processing method(s),wherein such method(s) is/are based on pixel values of the pixels of the digital embryo image, e.g. the intensity values of each pixel. Specific embodiments of identifying a head and a tail of the embryo are described in detail below in the detailed figure description.

Reducing the digital embryo image may particularly include cutting a subsection out of the image and/or deleting border regions of the image. In other words, depending on the location of the head and the tail of the embryo, a rectangle can be found within the digital embryo image, which includes the head and the tail of the embryo. In other words, the positions of the pixels in the coordinate system of the digital embryo image may be obtained, which represent the tail and the head of the embryo. In that context, the head may also include the yolk ball.

The digital embryo image may be defined as the rectangle identified within the original digital embryo image $e_i$. In other words, the remaining part of the original digital embryo image $e_i$ may be cut and deleted. Hence a new origin of the digital embryo image may be defined in the reduced digital embryo image. After reducing the digital embryo image $e_i$, the thereby obtained new digital embryo image may be referred to as the digital embryo image $e_i$.

In the context of the following description of the positioning procedure of the embryo, the unreduced digital embryo image may be referred to as the original digital embryo image and the reduced embryo image may be referred to as the new digital embryo image. Adjusting the position of the embryo may include rotating and or reflecting the rectangle which includes the head and the tail of the embryo, i.e. rotating and/or reflecting the new digital embryo image. This may be carried out with respect to an external coordinate system such as a coordinate system of/defined in an image processing application and/or the coordinate system of the original digital embryo image, i.e. the uncut digital embryo image. Since all the original digital embryo images are related to each other, i.e. may have a well defined spatial orientation with respect to each other e.g. due to the process of obtaining these original digital embryo images, it is also possible to relate the new digital embryo images, i.e. the reduced digital embryo images with respect to each other so that their positions are aligned. Hence, it is possible also to align the embryos with respect to each other.

When the embryos are aligned, for/in all new digital embryo images $e_i$ of the set of E digital embryo images, the embryos are oriented substantially identically. This may include, that in all the digital embryo images the head of the individual embryo is located on the left hand side and the tail is located close to the top border, i.e. close to the x-axis, when considering an origin of a coordinate system on the upper left part of the digital embryo image when viewed by a viewer. When an embryo is finally aligned, the digital embryo image may again be changed, in particular the shape of the digital embryo image may be changed, so that the digital embryo image has a rectangular size and is arranged in a predefined position with respect to an external coordinate system. After final alignment, each digital embryo image $e_i$ may be a rectangle, wherein the sides of the rectangle are parallel to the axis of an external coordinate system, which may be defined in/by a image processing application and wherein the embryos are aligned identically.

Given the description above the term digital embryo image $e_i$ refers to a digital embryo image $e^c_i$ that is suitable for obtaining the landmarks. As an example, a criteria for a digital embryo image $e^c_i$ is that the embryo is visible in the digital embryo image.

As an example, identifying L landmarks in a digital embryo image $i_i$ comprises for that digital embryo image $e_i$:

- identifying an initial outline of the embryo in the digital embryo image $e_i$ by applying image processing methods on the digital embryo image $e_i$, and

- applying an outline model to the initial outline and fitting the outline model to the initial outline to obtain a final outline of the embryo.

This method step may be applicable for each digital embryo image $e_i$ of the digital embryo images $e_i$, in particular each all digital embryo image $e^c_i$.

As an example the image processing methods may comprise one or more of the following:

- dividing foreground from background by applying an adaptive greyscale-threshold,
- error-suppression,
- applying erosion and dilation algorithms,

- deleting all pixels that do not belong to the largest binary object,
- applying a filling algorithm,
- applying a filtering routine.

As an example, the outline model comprises a ventral side model and a dorsal side model, wherein

- the ventral side model contains a definition of a circle $c_0$ representing the head of the embryo, a definition of a circle $c_1$ representing the yolk of the embryo and a definition of a circle $c_2$ and a straight line representing the tail of the embryo, wherein

  - - the definition of a the circle $c_0$ includes a radius $r_0$ around a center $(x_0, y_0)$,
  - - the definition of a the circle $c_1$ includes a radius $r_1$ around a center $(x_1, y_1)$,
  - - the definition of a the circle $c_2$ includes a radius $r_2$ around a center $(x_2, y_2)$, and wherein the model includes the further boundary conditions:
  - - the circle $c_0$ and the circle $c_1$ intersect each other,
  - - the circle $c_1$ and the circle $c_2$ are connected with identical slope at an angle $\varphi_1$, and
  - - the circle $c_2$ and the straight line are connected with identical slope at an angle $\varphi_2$, wherein

- the dorsal side model contains a definition of a circle and a straight line connected with identical slope, and wherein

- the final outline is composed of a ventral outline represented by a ventral curve $y_{ventral}(x)$ and of a dorsal outline represented by a dorsal curve $y_{dorsal}(x)$, wherein the ventral curve $y_{ventral}(x)$ is obtained by fitting the ventral model to the initial outline on the ventral side of the embryo, and wherein the dorsal curve $y_{dorsal}(x)$ is obtained by fitting the dorsal model to the initial outline on the dorsal side of the embryo.

The definition of a circle may comprise that the circle is a complete circle. The definition of the circle may comprise that the circle is a partial circle which also can be referred to as an arc. Hence, the partial circles $c_0$ and $c_1$ may intersect each other. Accordingly, the partial circles $c_1$ and $c_2$ may be connected with identical/continuous slope. The partial circle $c_2$ and the straight line may be connected with identical/continuous slope.

The angle $\varphi_1$ and the angle $\varphi_2$ may be defined with respect to specific coordinate systems. As an example, the angle $\varphi_1$, may be defined in a cylindrical coordinate system having an origin at the position $r_1$ which has the coordinates $(x_1, y_1)$ in the coordinate system of the digital embryo image $e_i$. If $\varphi_1$ is equal to 0˚, than a line starting from $r_1$ at said angle $\varphi_1 = 0˚$ is parallel to the y-direction in the coordinate system of the digital embryo image. Accordingly, a line starting from $r_1$ at an angle $\varphi_1 = 90˚$ is parallel to the x-axis in the coordinate system of the digital embryo image.

The angle $\varphi_2$ is similarly defined with respect to a cylindrical coordinate system having its origin at the point $r_2$ having the coordinates $(x_2, y_2)$ in the coordinate system of the digital embryo image.

Hence, a definition of a circle $c_1$ having radius of e.g. 100 pixels and an angle $\varphi_1 = 45˚$ represents a partial circle, namely a 1/8 of a circle with radius 100 pixels around its center $(x_1, y_1)$.

The term fitting as used in the present application may include a standard numerical fitting process, such as a non-linear gradient search algorithm or any other suitable algorithm.

As an example, fitting the ventral model to the initial outline on the ventral side of the embryo includes providing a plurality of different initial value sets for the parameters $x_0, y_0, x_1, y_1, r_0, r_2, a, \varphi_1$ and $\varphi_2$ and carrying out the fitting for each initial value set.

The plurality of different initial value sets may for example include 5, 10, 15, 20, etc. different initial value sets. In particular, there may be between 5 and 50 initial values sets. Each initial value set contains a specific values for each of the parameters used for the fitting. These different value sets may represent different morphologies of the embryo. As an example, value set 1 may represent a good starting point for a zebrafish embryo having an age $t_1$. Value set 2 may represent a good starting point for an zebrafish embryo having an age $t_2$, etc. After fitting with the different value sets, the best result may be chosen. Therefore, even if the fitting process may be stuck in a local extremal point starting from one initial value set, advantageously, when starting from a different value set, this local extremal point may be overcome.

The parameter a may represent the distance DL between the center of the circle $c_0$ and the circle $c_1$.

As an example, identifying the L landmarks $l_{ij}$ in a digital embryo image $e_i$ comprises for that digital image $e_i$:

- finding pixels of minimum brightness in the tail of the embryo by finding the pixel with minimum brightness in each vertical pixel column of the tail starting at a starting point $(x_{tail}, y_{tail})$ of the tail and ending at a maximum point $(x_{max}, y_{max})$ of the tail, wherein

- - each vertical pixel column is bounded by the ventral curve $y_{ventral}(x)$ and by the dorsal curve $y_{dorsal}(x)$, wherein
- - from the ventral curve $y_{ventral}(x)$ to the dorsal curve $y_{dorsal}(x)$ the first 35% of the pixels are omitted and from the dorsal curve $y_{dorsal}(x)$ to the ventral curve $y_{ventral}(x)$ the first 20% of pixels are omitted, and wherein
- - based on the pixels with minimum brightness a straight line linear regression is calculated, referred to as a yolk extension.

This method step may be applicable for each digital embryo image $e_i$ of the digital embryo images $e_i$, in particular each all digital embryo image $e^c_i$.

The term finding pixels of minimum brightness as used in the present application may include to process the pixel values of the digital embryo image and use the pixel values for identifying pixel(s) having the smallest intensity value(s).

The starting point $(x_{tail}, y_{tail})$ describes the starting point of the tail of the embryo in the digital embryo image. The coordinates of this point may be identified using the fitting method, as described above. In particular, this point may be identical to the point where circle $c_1$ connects to circle $c_2$. In other words, the coordinates $(x_{tail}, y_{tail})$ may be obtained using the center of circle $c_1$, i.e. $(x_1, y_1)$, the radius $r_1$ of said circle $c_1$ and the angle $\varphi_1$.

The maximum point $(x_{max}, y_{max})$ may be defined by the size of the digital embryo image. As an example, if the digital embryo image has a length in x-direction of 549 pixels, $x_{mas} = 549$. Accordingly, if the height of the image in y-direction is 349 pixels, then $y_{max} = 349$, given that the origin of the coordinate system is in the left upper corner of the digital embryo image.

As an example, identifying the L landmarks $l_{ij}$ in a digital embryo image $e_i$ comprises for that digital image $e_i$:

- setting a center point of a yolk ball of the embryo,

- defining a plurality of lines starting at the center point of the yolk ball,

- for each line identifying a position of a brightness minimum referred to as a yolk ball outline point,

- based on the distribution of the yolk ball outline points, either

  - - correcting the position(s) of one or more yolk ball outline points and then calculating a corrected center point of the yolk ball based on the complete set of yolk ball outline points, or
  - - calculating a corrected center point of the yolk ball using the identified yolk ball outline points, and

- setting the center point of the yolk ball equal to the corrected center point of the yolk ball.

This method step may be applicable for each digital embryo image $e_i$ of the digital embryo images $e_i$, in particular each all digital embryo image $e^c_i$.

The term position of a brightness minimum may also be represented by the location of one or more pixels having the smallest intensity values. In particular, this may be related to a location of a single pixel. Hence a yolk ball outline point may be used as a synonym for a brightness minimum along the respective line. The plurality of lines may include between 2 and 200 lines, in particular between 10 and 50 lines, as an example, 24 lines.

Identifying a position of a brightness minimum on the line in the visual appearance of the digital embryo image may be similar to identifying an intersection of the line with the darkest region in the image.

A correction of the position of the brightness minimum for each line may be carried out, if necessary. As an example, if a brightness minimum is identified, which is not within the yolk ball but obviously outside the yolk ball; this brightness minimum is replaced by excluding this brightness minimum from the analysis and identifying the brightness minimum of the remaining pixels, instead.

Using the obtained brightness minima, i.e. the obtained yolk ball outline points, a center point of the yolk ball is calculated particularly by calculating the mean of the positions of the yolk ball outline points. If this newly calculated center point deviates from the initial center point, the center point for further processing is the newly calculated center point. This process may be carried out iteratively, i.e. subsequently with a repeated calculation for each iteration cycle. As an example, this process can be repeated three times.

Using the yolk ball outline points, the yolk ball outline may be obtained.

As an example, identifying the L landmarks $l_{ij}$ in a digital embryo image $e_i$ comprises for that digital image $e_i$:

- defining a rectangle in the digital embryo image $e_i$ having the coordinates in a - coordinate system of the digital embryo image $e_i$: $(x_{left}, y_{left})$, $(x_{cont}, y_{left})$, $(X_{cont}, y_{top})$ and $(x_{left}, y_{top})$, wherein the coordinates are taken from the following points in the digital embryo image $e_i$:

- - $(x_{left}, y_{left})$: front end of the embryo,
- - $(x_{cont}, y_{cont})$: contact point of head and yolk ball, and
- - $(x_{top}, y_{top})$: top most point of the embryo,

- identifying the outline of a bright portion of the rectangle using a threshold calculation, referred to as a cerebellum outline, and

- identifying a position of the maximum distance between the of the cerebellum outline and the dorsal curve $y_{dorsal}(x)$.

This method step may be applicable for each digital embryo image $e_i$ of the digital embryo images $e_i$, in particular each all digital embryo image $e^c_i$.

The term front end of the embryo may also relate to the front end of the embryo outline which is, when viewed by a viewer, the part of the embryo/embryo outline having the smallest x coordinate.

The contact point of head and yolk ball may be the contact point of the outline of the head and the outline of the yolk ball. In view of the outline model as described above, the contact point of the head and the yolk ball may be the intersection point of circle $c_0$ and circle $c_1$.

The top most point of the embryo may be the top most point of the embryo outline and may be the point of the embryo outline having the smallest y coordinate.

As an example, identifying L landmarks $l_{ij}$ in a embryo image $e_i$ comprises for that digital embryo image $e_i$:

- applying an anisotropic filter, such that lines in the digital embryo image $e_i$ oriented substantially parallel to a first direction are reduced and such that lines oriented substantially parallel to a second direction, which is orthogonal to the first direction, are amplified,

- finding pixels of minimum brightness in the tail of the embryo by finding the pixel with minimum brightness in each vertical pixel column of the tail starting at a starting point $(x_{tail}, y_{tail})$ of the tail and ending at a maximum point $(x_{max}, y_{max})$ of the tail, wherein

  - - each vertical pixel column is bounded by the dorsal curve $y_{dorsal}(x)$ and by the yolk extension,
  - - from the dorsal curve $y_{dorsal}(x)$ to the yolk extension the first 30 % of the pixels are omitted, and from the yolk extension to the dorsal curve $y_{dorsal}(x)$ the first 45% of pixels are omitted, and wherein
  - - based on the pixels with minimum brightness a line is obtained, referred to as a notochord outline.

In this context, the first direction may be the vertical direction. The vertical direction may be a direction parallel to the y-axis in the coordinate system of the digital embryo image. Accordingly, the second direction may be the horizontal direction. In this context, the horizontal direction may be a direction parallel to the x-axis in the coordinate system of the digital embryo image.

The term reducing lines in the context of the present application may include, that lines in the image along the first direction may be adapted such that they have pixel values very close to the pixel values of the pixels surrounding of the line. Therefore, this line does not appear visible anymore or is decreased in its visibility. Accordingly, the term amplified, as used in the context of the present application includes that lines that are oriented substantially horizontally are increased, i.e. the intensity values of the respective pixels are increased. Hence, such lines are easier visible by a viewer.

A line in the context of this example does not need to be straight line. Rather, the term line may also include the number of neighboring pixels that are identified to belong together.

Obtaining the line, i.e. identifying that pixels belong together may be carried out by a filter process or by calculating a straight line linear regression.

As an example, identifying the L landmarks $l_{ij}$ in a digital embryo image $e_i$ comprises for that digital image $e_i$:

- defining at least one point in the ventral curve $y_{ventral}(x)$ as a landmark, and/or
- defining at least one point in the dorsal curve $y_{dorsal}(x)$ as a landmark, and/or
- defining at least one point in the yolk extension as a landmark, and/or
- defining at least one point in the cerebellum outline as a landmark, and/or
- defining at least one yolk ball outline point as a landmark, and/or
- defining at least one point in cerebral outline as a landmark, and/or
- defining at least one point in the notochord outline as a landmark.

This method step may be applicable for each digital embryo image $e_i$ of the digital embryo images $e_i$, in particular

each all digital embryo image $e^c_i$.

As an example, one landmark may be the maximum of the cerebral outline, wherein the cerebral outline is identified as described above. Moreover, as an example, four landmarks may refer to the notochord outline, wherein the notochord outline is identified as described above.

As a further example, 24 landmarks may be defined by the yolk ball outline points, wherein the yolk ball outline points as identified above.

As an example, in total 64 landmarks may be defined.

As an example, the method may further comprise the initial step of obtaining a reference embryo image re, wherein the reference embryo image re comprises L reference landmarks $rl_j$, wherein each reference landmarks $rl_j$ is obtained from respective landmarks $l_{kj}$ of a set of E' of digital embryo images $e'_k$, wherein E' is a natural number.

In the present application, k = 1 ... E'.

As an example, each reference landmark $rl_j$ may be obtained by calculating the mean of the positions of the respective landmarks $l_{kj}$ of said set of E' digital embryo images $e'_k$.

In other words, from a set of E' digital embryo images the landmarks of the reference embryo image may be obtained. The set E' of digital embryo images which may be used for obtaining the landmarks of the reference embryo image may be identical to the set of E digital embryo images which should be evaluated/analysed.

As indicated above, different sets of digital images may be used for providing the warp function and for carrying out the evaluation. However, these sets may be partially identical or completely identical. It may also be, that the set of digital images used for identifying the warp function is included in the set for evaluation. Identifying the warp function may include defining, calculating, in particular simulating by a computer, etc. The term function is not necessarily reduced to the mathematical meaning. Rather, the term function may also include the meaning that an array is provided, which includes instructions for carrying out the warping of the landmarks from the position in the digital embryo image to the position of the landmarks in the reference embryo image. Hence, to this part, the warp function may include a coordinate transformation, which may be, in one example, a translation. In addition, the warp function may also include to coordinate transformations for the remaining pixels that do not define the landmarks. The warp function may include interpolation. Hence a warp function may also be referred to as a warp field. Applying a warp function/warp field may be referred to as warping, which means that an image or even an object within an image that is warped is distorted to obtain a shape as defined by/in another image, in particular to obtain a shape of another object, referred to as a reference image/ reference object. Shape in this context may include external and/or internal shape of an object. The reference shape is preferably defined by the landmarks. In other words, the warp function/field is identified by translating the positions of landmarks of a digital embryo image to positions of landmarks of reference embryos. The spatial relation of the remaining pixels with respect to the landmarks may be considered when warping, such the position of the remaining pixels are translated accordingly. It is understood that translation of the pixel is not a physical translation of a pixel but includes assigning a pixel value of a pixel that is to be translated to a pixel having the position to which the previous pixel will be translated.

It is also possible, that the set of E' digital embryo images is different of the set of E digital embryo images. In particular, the digital embryo images $e'_k$ of the set of E' digital embryo images may not be included in the set of E digital images $e_i$. It may also be possible that the set of E' digital embryo images is a subset of the set of E digital embryo images.

The landmarks may provided using an averaging process based on the landmarks in the individual digital embryo images e'k.

As an example, after the initial step the method may further comprise:

- identifying L landmarks $l_{mj}$ in each digital embryo image $e''_m$ of a set of E'' digital embryo images $e''_m$ using the method according to the invention, wherein E'' is a natural number,

- for each digital embryo image $e''_m$ of the set of E'' digital embryo images:

  - - manually identifying a number of D domains in the digital embryo image $e''_m$ and
  - - warping the digital embryo image $e''_m$ by translating the position of each landmark $l_{mj}$ in the digital embryo image $e''_m$ (in the coordinate system of the digital embryo image) into a position (in the coordinate system of the digital embryo image) of a corresponding reference landmark $rl_j$ of the reference embryo image re,

- obtaining a number D of domains in the reference embryo image re based on the position of the D domains in the warped digital embryo images $e''_m$.

In the present application, m = 1 ... E''.

The set of E'' digital embryo images $e''_m$ may be a subset of the set of E digital embryo images $e_i$. The set of E'' digital embryo images $e''_m$ may be independent of the set of E digital embryo images $e_i$.

In other words, a number of D domains in each digital embryo image $e''_m$ may be defined. D is a natural number. As an example, D may represent 8 different domains, such as a yolk domain, an Eye domain, a midbrain-hindbrain domain, a brain domain, a skin domain, a heart domain, a notochord domain and a spinal cord domain. These domains may be manually identified in each of the digital embryo images $e''_m$. When warping each of the digital embryo images $e''_m$, these domains, in particular, their spatial distribution in the digital embryo image $e''_m$ are also warped. These spatial distribution of the domains are applied to the reference embryo image.

If necessary, obtaining the D domains in the reference embryo image may include interpolation as part of the warping process of the domains D in the digital embryo image. Warping the digital embryo image $e''_m$ by translating the position of each landmark $l_{ij}$ in the digital embryo image $e''_m$ may be carried out in the coordinate system of the digital embryo image, wherein each landmark may obtain a position of the respective landmark in the coordinate system of the reference embryo image re.

Moreover, obtaining the number of D of domains in the reference embryo image re may include that in the warped digital embryo image $e''_m$ the position of the pixels relating to a specific domain are obtained. The pixels in the reference embryo image having the same positions (now in the coordinate system of the reference embryo image) are assigned to the same domain. In other words, this process may also be understood such that the domains in the warped digital embryo image are mapped on the reference embryo image re. Hence, also the reference embryo image re contains D domains, in the above example 8 domains.

This process is carried out for all domains and for all digital embryo images $e''_m$. The domains in the reference embryo image re may be obtained by applying an averaging process using the domains in each digital embryo image $e''_m$ as explained in detail below.

It is also possible, that the reference embryo image is obtained from a database, etc.

As an example, the method may further comprise the step for each digital embryo image $e_i$ of the set of E digital embryo images:

- after warping the digital embryo image $e_i$ assigning each pixel in the warped digital embryo image $e_i$ to a domain based on the domain of the respective pixel in the reference embryo image re.

In other words, pixels having identical coordinates in a warped digital embryo image and in the reference embryo image are assigned to the same domain.

Hence, it is conventionally known that a coarse detection of zebrafish embryos and the detection of sections of tissue is possible. However, conventional methods are only supporting tools and the validation has to be carried out by a human expert.

Advantageously, the above described method allows to process and quantify millions of digital images in a fully automatic manner. Contrary to conventional methods, in each process step errors may be suppressed or erroneous data may be detected and deleted so that the fully automatic processing provides very reliable data.

This may be accomplished by using mathematical models on the basis of estimated tissue dependencies. Hence, detection of tissue is much more reliable as compared to the prior art, which is advantageous in automating the process.

It has been found out that the used algorithm works best, i.e. that the activity of the algorithm is improved since all parameter values are provided/input in the algorithm by exemplary data and the algorithm may adapt on its own to the provided example data.

Further advantageously, compared to prior art algorithms, the above method allows and provides reliable results even with a large data set. In particular, detailed outlines are provided and not only outline estimates. This has also been obtained by introducing the mathematical outline model. In addition, it is possible to navigate within an image and to further analyse the image. Contrary to commercial methods, it is avoided that the image is already at an early stage provided with large errors which typically make processing impossible. In addition, it is avoided to merely provide/adapt thresholds. Rather, parameters are extracted in an automated manner from example data.

In other words, the reference embryo image is a fully synthetic reference embryo. All the algorithms may be adapted to the fully synthetic reference embryo. Since the algorithm is driven by examples, manual parameter adaptation is not necessary. Hence, advantageously, there is provided a simple use of the application by means of the adaptive algorithm. In addition, error tolerance is increased and intelligent judging routines are provided in order to avoid errors.

Computer program product according to an aspect

An aspect of the present application may relate to a computer program product in particular implemented as a data stream or stored on a computer readable medium, including computer readable instructions, which, when loaded in the memory of a computer and executed by the computer, urge the computer to carry out the method according to the present application.

## EP 2 278 548 A1

<u>System according to an aspect</u>

An aspect of the present application may relate to a system for computer aided automatically analysing a set of E digital embryo images $e_i$ comprising:

- an image generator adapted to obtain the set of E digital embryo images $e_i$, where E is a natural number,

- an image data processor adapted to process each digital embryo image $e_i$ of the set of E digital embryo images by:

 - - identifying L landmarks in the digital embryo image $e_i$, wherein L is a natural number,
 - - warping the digital embryo image $e_i$ by translating the position of each landmark $l_j$ in the digital embryo image $e_i$ (in the coordinate system of the digital embryo image) into a position (in the coordinate system of the digital embryo image) of a corresponding reference landmark $rl_j$ of a reference embryo image re, and
 - - evaluating the pixel values of the warped digital embryo image $e_i$.

Summarising the above, among others, the present application may relate to microscopically classifying embryos, in particular embryos of zebrafish, which have a yolk ball, a tail and head, comprising for each of the embryos creation of an optical visual side image, wherein an outline of the embryo, the yolk ball and the tail are accentuated using contrast differences.

Such a method may include creation of a mathematical representation for each side image by adapting a side image model using landmarks to the outline of the embryo and subsequently to the outline of the yolk ball and the tail by means of interpolation and/or distortion of the side image model to the contrast differences.

Such a method may include creation of a reference side view by averaging of at least two mathematical describable representations.

Such a method may include reverting/reworking the reference side view, wherein, in addition to the yolk ball and the tail, further details in the reference side view each are individually assigned to optical homogeneously colored area portions as well.

Such a method may include individually mapping the area portions to the side images by distorting the reverted/ reworked reference side views until reaching a congruence of the landmarks of the reference side view and the mathematically describable representation of the side image.

As an example, the creation of each of the optical visual side images may comprise capturing of a fluorescence activity of the respective embryo which are signed to the individual area portions in the lateral distributed manner.

Specific embodiments of the above method or the above method in its entirety may apply for all digital embryo images $e_i$ or only for the digital embryo images $e^c_i$. Specifically the above method steps describing how to obtain the landmarks by image processing steps may apply only for the digital embryo images $e^c_i$. Hence for these method steps and/or system components, the term digital embryo image $e^c_i$ and the term digital embryo image $e_i$ may be used as synonyms. In analogy, these method steps and/or system components may not be applicable for the digital embryo image $e^y_i$.

<u>Figure description</u>

Specific embodiments of the present application are described in the following by means of example figures. There is shown in

Fig 1:      a pipeline for automatic spatial registration of tissues specific reporter gene activity in zebrafish embryos;
Fig. 2:      examples of digital images;
Fig. 3:      an overview of a registration of domain-specific expressions in transgenic embryos;
Fig. 4:      activities of a enhancer-promoter combinations;
Fig. 5:      an overview of method steps;
Fig. 6:      an overview of details of specific method steps;
Fig. 7:      a schematic overview of embryo orientation;
Fig. 8:      a schematic overview of embryo outline detection;
Fig. 9:      a schematic overview of yolk extension detection;
Fig. 10:      a schematic overview of yolk ball outline point detection;
Fig. 11:      a schematic overview of cerebellum detection;
Fig. 12:      a schematic overview of method steps and results;
Fig. 13:      an overview of digital images; and
Fig. 14:      a schematic overview of a reproducibility of the method.

As described above, zebrafish embryos offer a unique combination of high throughput capabilities and the organismal complexity of the vertebrate animal for a variety of phenotype screening applications. The present application provides automation of imaging technologies to exploit the potential provided by the transparent embryo. The present application provides a high throughput pipeline for registering domain specificity of reporter expression in zebrafish embryos with the aim of mapping the interaction specificities between cis-regulatory modules and core promoters. Specific embodiments of the described method include automated intelligent microscopy and custom built embryo detection and segmentation mehtod, partly or fully implemented on a computer, allowing the registration of reporter activity in almost 18 thousand microinjected zebrafish embryos as an example number of digital embryo images. Specific examples of the application allow evaluation of domain specificity of Venus reporter expression, particularly by warping of individual embryo images onto a virtual two dimensional reference shape, the reference embryo image. Using the embryo imaging pipeline a diversity of interaction specificities between 203 enhancer core promoter combinations may be demonstrated. These interaction specificities underscore the importance of the core promoter sequence in cis-regulatory interactions and provide a valuable promoter resource for transgenic reporter studies such as enhancer traps. The technology described in this application may also be suitable for the high throughput analysis of spatial distribution of a variety of fluorescence readouts in zebrafish embryos for genetic, pharmaceutical or toxicological screens.

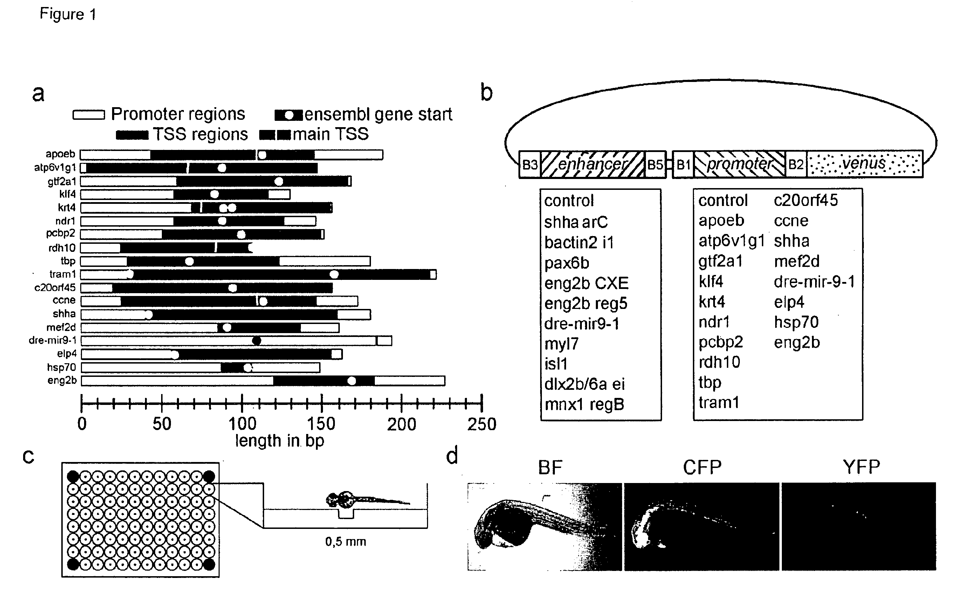

Before describing embodiment(s) of the application in detail, figure 1 to 4 are briefly described.

**Figure 1a** shows an overview of the defined minimal promoters that may be used. Promoters are represented as horizontal bars where bar length represents the promoter length (in scale). Grey areas represent TSS regions covered by 5' ends of spliced ESTs or GenBank mRNAs that map in the promoter region (UCSC genome browser database). The main TSSs are indicated as vertical bars if applicable and Ensembl gene starts are indicated (red triangles).

**Figure 1b** shows 19 core promoter fragments that were inserted in multisite gateway expression constructs alongside one of 11 enhancers and a venus reporter resulting in 203 constructs injected into embryos.

**Figure 1c** shows that at prim-15 stage the dechorionated and CFP-positive embryos were sorted in agarose coated plates (up to 92 per plate) and oriented for lateral view aided by a 0,5 mm hole holding the yolk ball.

**Figure 1d** depicts that each embryo may be acquired in 4 z-slices in 3 channels.

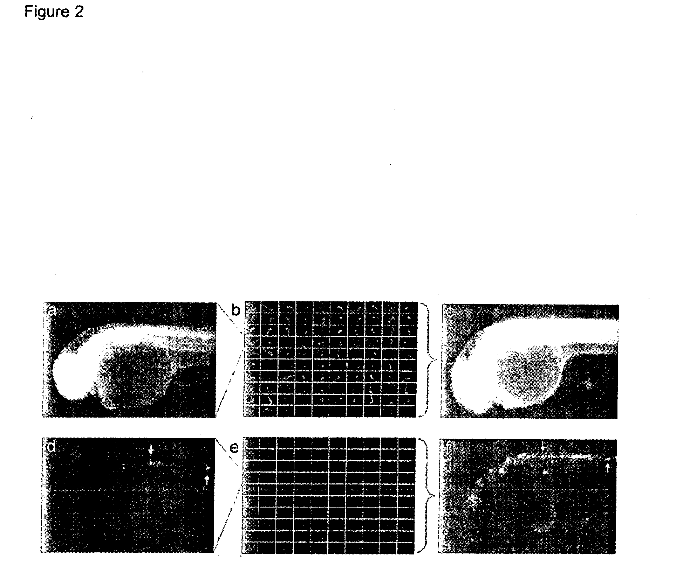

**Figures 2a-c** shows CFP images (also referred to as CFP filter views) as examples of digital embryo images $e^c_i$ and Figures 2d-f YFP images (also referred to as YFP filter views) as examples of digital embryo images $e^y_i$ of the very same embryos coinjected with an construct containing the isl1 zCREST2 enhancer linked to an eng2b minimal promoter and CFPmRNA. Figures 2a,d show single transient transgenic embryo. Arrows in Figure 2d indicate single neurons expressing Venus driven by the reporter construct. Figures 2b, e show thumbnail images of embryos coinjected with the isl1::eng2b construct and CFP-mRNA. Figures 2c,f show maximum projections of the same embryos as in Figure 2b and Figure 2e warped onto a reference embryo shape. Arrows in **Figure 2f** point at the same neurons as in Figure 2d.

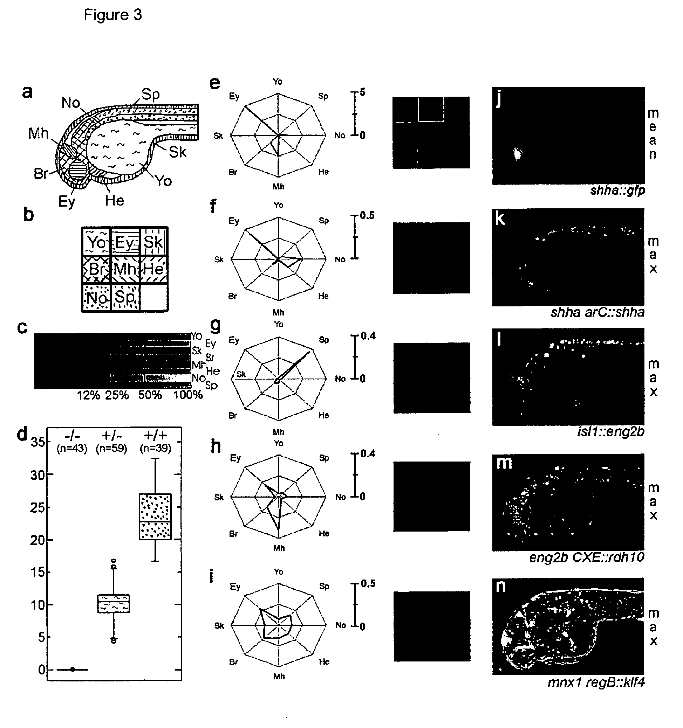

**Figure 3** shows registration of domain-specific expression in transgenic embryos as described in detail below.

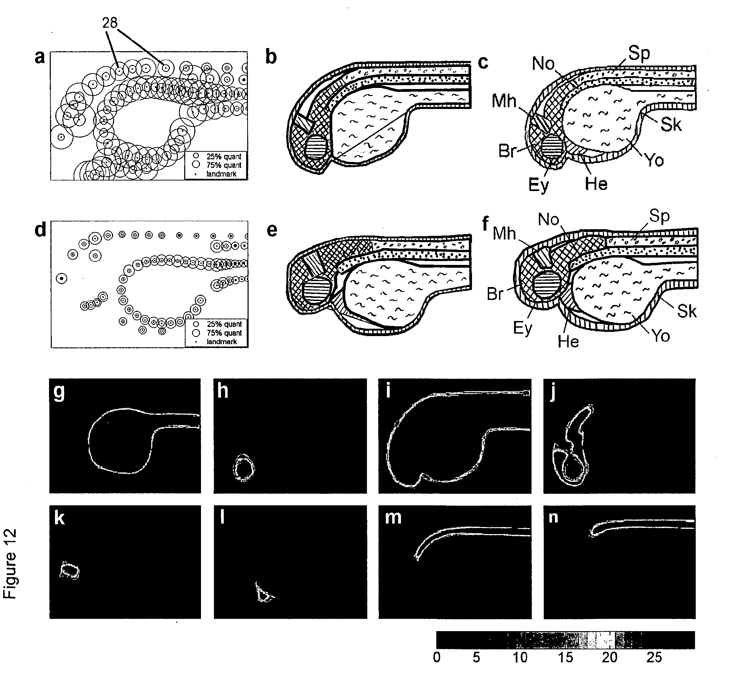

**Figure 3a** shows superimposed arbitrary tissue definitions from 26 embryos warped onto the reference embryo shape (see also Figure 12). Abbreviations: Yo, Yolk ball and extension domain, Re, retina domain, Sk, embryonic skin domain, Br, brain domain, Mh, midbrain-hindbrain boundary domain, He, heart domain, Sc, spinal cord domain, No, notochord domain (see Suppl. data for details of domain definitions).

**Figure 3b** shows color code to indicate domains with representative domains abbreviated as in Figure 3a.

**Figure 3c** shows a color scale illustrating color values and corresponding signal intensities.

**Figure 3d** shows a boxplot diagram indicating distribution of measured GFP signal intensities of embryos derived from a crossing of shha:gfp stable transgenic line heterozygous individuals. Genotype of siblings was determined by visual inspection.

**Figures 3e-i** show 21 Distribution of GFP and Venus signal intensities normalized to domain size as demonstrated by radar plots (left) and color codes (right) with constructs as indicated in Figures 3j-n. Abbreviations and color code are as in Figure 3b. Figure 3j shows a mean projection generated from embryos derived from the same crossing as in Figure 3d showing GFP expression pattern and signal intensities. Figures 3k-n show maximum projections of distinct expression profiles generated by transient expression of constructs as indicated.

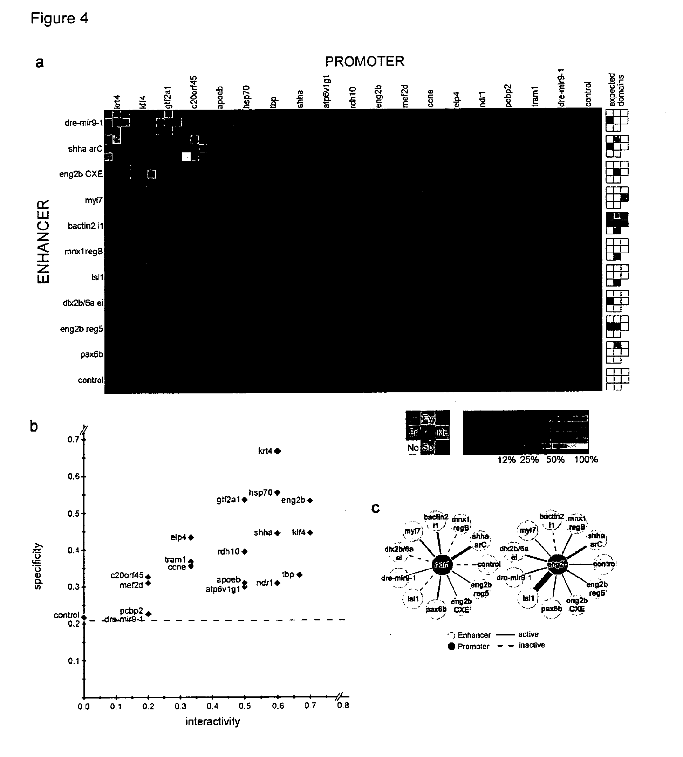

**Figure 4** shows activities of enhancer-promoter combinations reveal interaction specificity of core promoters.

**Figure 4a** shows an interaction matrix of 203 reporter constructs reflecting a total of 12582 transient transgenic embryos. Color intensity codes as in Figures 3a-c are arranged into rows (enhancers) and columns (promoters) and are sorted in descending order according the average expression values (expressivity) of the particular enhancer or promoter, see also Figures 3a-c and Table 3). Grey boxes indicate constructs not assayed. The last column symbolises the expected domain specificity of the enhancers.

**Figure 4c** shows a plot diagram illustrating the differential interactivity and domain specificities of core promoters with enhancers. On the x axis the ability of core promoters to interact with enhancers (interactivity) is demonstrated as the percentage of enhancer combinations, which exceed the maximum of Venus signal intensity of the corresponding control experiments. On the y axis the mean proportion of Venus signal in the expected domains indicated in the far right column on the matrix in a (specificity) is shown in conjunction with the shha ar-C, eng2b CXE and isl1 enhancers. Dashed line indicates expected proportion of fluorescence signal by random reporter activity.

**Figure 4b** shows an interaction of the ndr1 and eng2b promoters with enhancers. Thickness of black lines indicates relative strength of interaction as measured by the total sum of brightness of pixels.

Description of specific embodiments

High throughput sequencing of the human and model vertebrate genomes has generated a tremendous amount of sequence information that provides the raw material for the holistic analysis of the molecular organization of organisms.
However, the sequence data can only be used to decipher the information content of genomes if functional assays are designed and implemented with matching high throughput capabilities. In particular, the development and exploitation of imaging technologies for high content analysis of gene expression and function in the complexity of the organism is a primary objective. The zebrafish represents an ideal vertebrate system for genome scale functional assays due to its high throughput capabilities. The capacity of the large number of transparent eggs and extrauterine developing embryos makes the zebrafish a straightforward choice for cost effective genetic, toxicological, chemical and drug discovery high throughput screens in vertebrates (reviewed). Analysis of reporter gene expression in transient and stable transgenic zebrafish embryos provides the opportunity for efficient and rapid detection of tissue specific gene activity and accelerates functional testing of bioinformatically predicted cis-regulatory modules (CRMs) of vertebrate developmental genes. Until now, such studies remained limited in capacity due to the lack of automated tools for the spatial detection of reporter gene expression. The method according to the present applciation advantageously provides the ability to automate and simultaneously register reporter gene activity in multiple tissues/domains in tens of thousands of fish embryos therefore greatly enhancing the potential of zebrafish for functional analysis of CRMs.
CRMs are found in scattered locations often at a large distance from genes. Correct identification of the cognate targets of CRMs that often carry disease-causing mutations requires an understanding of the mechanisms specifically linking CRMs and their target gene promoters. The recent discovery of an unexpected diversity of core promoter composition and a complementing large variety of transcription factors that can bind to core promoters suggest a specific regulatory role for CRM interactions. Indeed, constraints imposed by the specificity of CRM - core promoter interactions defined by core promoter motif composition have been described. Given the lack of knowledge on the role of the core promoter in cis-regulatory interactions as well as the dependence on core promoter function for various transgenic applications a better insight into the specificity of enhancer-promoter interactions in the context of the embryo is needed. Advantageously, the method according to the present application allows a system biology approach to document reporter expression in transient transgenic zebrafish embryos.
According to specific embodiments of the present applcaition, an automated image acquisition pipeline including a custom developed image-processing algorithm may be provided, which may be applied in the processing of nearly 18 thousand embryos involving over 200 thousand images. This allows the generation of an interaction-specificity map of a comprehensive set of core promoters and transcriptional enhancers in over 200 combinations. The results of such a proecess indicate a diversity of interaction specificities between enhancers and core promoters, which implies that the core promoter sequence structure plays a basic role in defining its ability to interact with CRMs. Moreover, our results underscore the importance of core promoter choice and design in enhancer trap screens as well as in conventional transgenic reporter experiments aiming to detect tissuespecific gene regulatory function or to generate cell type specific reporter transgenic lines.

Pipeline of transgenic embryo image acquisition

To address the interaction specificity between enhancers and a diverse set of core promoters a pipeline for a reporter expression screen of microinjected zebrafish embryos was designed as depicted in Figure 1. Core promoters used in the experiments were chosen to reflect a diverse set of gene expression profiles in the embryo (developmentally restricted, tissue specific and ubiquitous) and the exact locations of the core promoters were defined on the basis of transcription start site distribution (Figure 1a, further details below and supplementary table 1). In order to test the capacity of core promoters to interact with enhancers each of 10 CRMs (enhancers) plus a negative control (further details below) representing a range of tissue specific activities present in the embryo were linked to each core promoter (Figure 1b). Zygote stage embryos were co-injected with the promoter-enhancer constructs and in vitro synthesized cfp mRNA as an injection control. Embryos were preselected manually for CFP activity at 24hpf. Four slices of bright field, CFP filter and YFP filter views were captured for each of <92 laterally positioned prim-15 stage embryos per plate (Figure 1c) in order to detect embryo morphology, control CFP expression as well as transient expression of Venus respectively (Figure 1d). The expression of Venus was mosaic and varied among individuals within an injection batch as expected from plasmid DNA injected into embryos directly 5,7,8. Thus, a total of 17,793 samples were imaged representing 203 enhancer-promoter constructs in a total of 213,516 images.

Embryo registration and projection tool

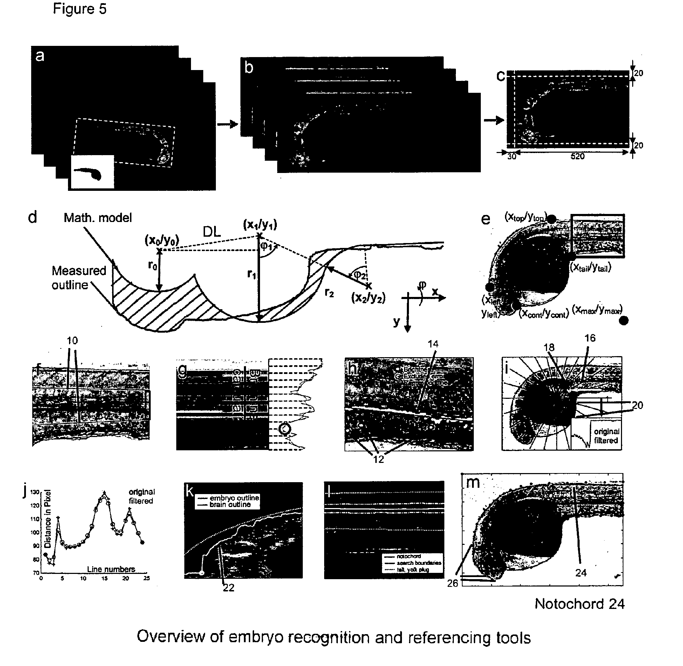

To identify the domain specificity of mosaic Venus activity in embryos at a high throughput a 2-dimensional embryo registration and projection tool was developed (further details below and Figures 5a-m). The CFP and bright field embryo images were used to detect the embryo outline (further details below) then embryos were automatically oriented anterior to the left and a set of anchor points were determined reflecting the outline and several key morphological features such as the yolk cell, cerebellum and notochord (see Figure 5).

Based on 12582 embryo images a 2 dimensional reference embryo shape was generated by landmarking (see Figure 12a). All CFP and YFP images that matched quality control of experimental embryos were projected onto the reference embryo shape by warping (for numbers of embryos see Table 3). This step resulted in a single overlay image for each construct (see Figure 2, Figure 12). As demonstrated in the example of Figure 2, individual embryos injected with an isl1 zCREST2 enhancer and an eng2b promoter construct resulted in a small number of Venus positive cells with limited information about overall specificity of CRM activity (Figure 2d). However, the maximum projection images generated from the full experimental batch of embryos injected with the same construct (Figure 2e) revealed a comprehensive pattern of neural specific Venus activity confirming the published function of the isl1 zCREST2 enhancer24 (Figure 2f). The quality of the overlaying was demonstrated by the projection carried out on the CFP images (Figures 2a-c).

Domain specificity of reporter expression

To achieve rapid spatial registration of the reporter gene activity for hundreds of DNA constructs, individual embryo images were warped onto the 2-dimensional reference shape, which was arbitrarily subdivided into domains reflecting key embryo tissues depicted in different colors (Figure 3a,b, Figure 12c).

The quality of the automated domain assignment has been verified by comparing it to manually segmented embryo images (Figure 12d-k, Table 6). Then pixel intensity was measured in individual extended focus embryo images for each domain. To obtain a readout of reporter activity, the sum of Venus pixel intensity in a domain was calculated, normalised to the domain size and to embryo numbers used.

The results were visualized by a radar plot or color intensity code (Figures 3c,e-i). The pixel intensity count provided quantification of fluorescence signal as demonstrated by measuring a GFP reporter driven by shh regulatory elements in hemizygous and homozygous individuals of a stable transgenic line (Figure 3d). The median pixel intensity count was proportional to the copy number of the GFP transgene and correctly identified the transgene dosage of 96 out of 98 transgenic individuals. The reporter activity of the shh:gfp transgenic zebrafish line was correctly assigned in the notochord, retina, brain compartments and visualised by a mean projection overlay (Figures 3e,j). Mosaic expression in microinjected embryos was similarly analysed by assignment of mean pixel intensity normalized to domain size (Figures 3f-i). The spatial analysis of Venus expression resulted in reproducible patterns of domain specificity in independent repeats of the microinjection experiments as demonstrated by experiments carried out with the shha arC::krt4 construct (further details below and Table 5).

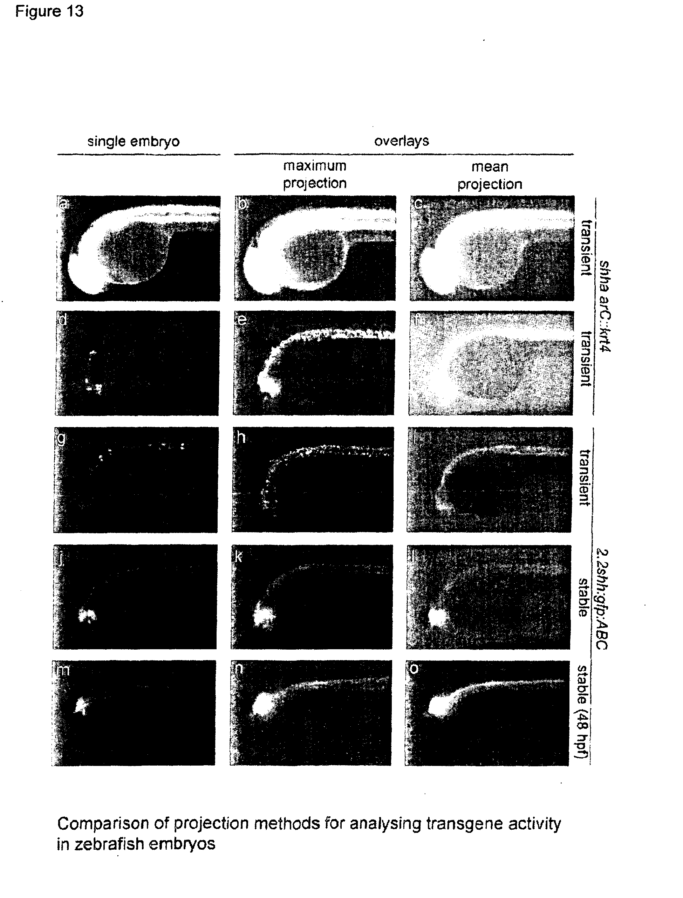

Maximum projections appeared more informative for mosaic reporter activity than mean projections (Figures 3k-n, for comparisons of mean and maximum projections see Figure 13), while mean projections prove superior for demonstrating transgene activity in a transgenic line (Figure 13). In summary, the domain assignment results in radar plots indicated fluorescence activities in the same domains as demonstrated by the overlay projections (compare Figures 3f-i to k-n). Interaction mapping between core promoters and enhancers

To test the reporter expression pipeline in a large scale experiment the 203 reporter constructs were injected into embryos and analysed for domain specific reporter activity. The complete set of results is shown in an interaction matrix of Figure 4a and Table 3. In the interaction matrix the experiments were ranked by the degree of observed expression activity between enhancers and promoters. The matrix revealed large variation of Venus activity among various combinations of a given promoter and enhancer. Most promoters were found to be inactive with a negative control enhancer. Notable exceptions include promoters in the first five columns of the matrix, where basal activity above the negative control promoter were observed (e.g klf4, gtf2a1). Variable up-regulation of the promoters was detected upon addition of several enhancers and most profound enhancer effects were observed with promoters that showed basal activity (e.g. apoeb and krt4). However, core promoters without basal activity were also activated by at least one enhancer (e.g. eng2b or ccne) indicating that these core promoters were able to respond to CRM input. All listed enhancers activated at least one core promoter above its basal activity (i.e. that observed with the negative control enhancer fragment, Figure 4a) confirming enhancer functionality.

Enhancer-core promoter combinations resulted in the expected domain activities with varying efficiency. To aid the comparison of the observed activity and the expected domain restricted activity of enhancers, a schematic diagram presented at the right side of the matrix depicts the expression pattern of the enhancers' cognate target gene. For instance, shha ar-C was highly active in the domains of shh expression, the notochord and in the brain, with most promoters tested. Tissue specificity was also clearly observed for other enhancers (e.g isl1, eng2b CXE), while the dre-mir9-1 enhancer, identified as a brain enhancer[12] showed no apparent domain restriction with most promoters including the dre-mir9-1 promoter in this assay. Moreover, enhancers did not necessarily interact with their cognate promoters more efficiently than with heterologous promoters. For example, the shha ar-C enhancer was found to be more active with the krt4 than with the shha promoter (Figure 4a) while its tissue specificity was retained in both combinations.

The differential ability of promoters in interacting with enhancers raises the question how efficiently does a tissue-specific enhancer activate core promoters in the expected domains, a matter important for promoter design in enhancer trap and transgenic assays of CRMs. To evaluate the utility of core promoters for enhancer activation 3 highly specific enhancers were chosen (shha ar-C, isl1 and eng2b CXE) and their interaction with all 19 promoters analysed. The distribution of reporter activity in the expected domains versus total expression domain activities was expressed in percentage and the mean for the 3 enhancers were presented in the plot diagram of Figure 4b. The plot diagram also demonstrates for each promoter their capacity to interact with enhancers in general (interactivity) as demonstrated by the percentage of enhancer combinations in which the given core promoter showed activity above the basal level (above the negative controls). The interaction matrix and interaction plot identified sets of promoters (such as krt4, klf4, and eng2b) with the majority of Venus expression in the expected domains and demonstrated ability to interact with more than half of the enhancers. Other promoters were less likely to interact with enhancers in a specific fashion and only in conjunction with a small number of enhancers and mostly providing Venus expression comparable to the negative control promoter (e.g pcbp2, and dre-mir9-1; Figures 4a,b).

A striking observation was the apparent differential interaction-specificity of individual enhancer-promoter combinations. For example, the ndr1 and eng2b core promoters showed differential ability to interact with most enhancers (Figure 4c). Thus, the interactivity as well as the domain/tissue specificity of enhancer promoter interactions were highly dependent on the identity of the core promoters applied.

In summary, our data revealed a diversity of enhancer-promoter interaction specificities as detected by registration of domain specific Venus expression in microinjected zebrafish embryos.

In view of the above, specific embodiments as described in the present application advantageously provide a high throughput image acquisition and processing system for the spatial registration of tissue specific transgene fluorescence signals in zebrafish. In particular, a pipeline based on automated image acquisition of thousands of arrayed live transgenic zebrafish embryos and the warping of experimental embryos onto a 2-dimensional virtual reference shape with arbitrarily defined anatomical features may be applied. The warping onto the reference embryo shape advantageously allows the registration of mosaic and continuous fluorescence signals in key embryo domains relevant for high throughput expression screening applications.

At least two ways of data analysis may be provided: Firstly, domain specificity may be visualized by fluorescence intensity analysis. Secondly, the embryo image projection protocol may provide spatial visualization of fluorescent signals from dozens of embryos warped onto a single 2-dimensional reference embryo. Advantageously, the overlay technique may overcome the effect of reporter expression mosaicism in an analogous fashion to conventional used manual expression plotting protocols, but with the added benefit of automation. Thus, transient expression analysis, which requires much less time and space than stable transgenic lines may be applied to analyse CRMs at genuinely high throughput. Given the limitations of transient expression, such as potential loss of some regulatory control of transgene expression that may act in the chromosomal context, it was found that transient transgenic screen is the rapid and reliable first level screen assay particularly suited for high throughput.

Advantageously, specific embodiments of the present application provide a simplification of the image analysis by 2-dimensional warping therefore allowing short computing time, keeping hardware requirements low and enabling the rapid analysis of large number of embryos (up to tens of thousands in a time bin, such as 15 minutes, an hour, 5 hours, 12 hours, a day, etc.) which is the key requirement for high throughput applications.

Applying a customized self-learning algorithm according to a further embodiment of the present application, as described in detail below, advantageously allows the application of parameters that are not determined by fixed thresholds but are extracted individually out of the context of each image or an assembly of images of a training data set. Thus, domain definitions within the reference embryo shape can be user defined and flexible. At the same time, the domains are of sufficient detail to use in analysis of tissue-specificity of well-defined organs and tissues (such as the retina, notochord or spinal cord).

The shape and size of embryos and domains vary greatly among individuals as demonstrated by the anchor point distribution shown in figure 12a. This is due to the natural variation in shape and due to irregularity of developmental stages used. This individual variation among embryos complicates the registration of embryo domains.

However, as described below, according to specific embodiments of the present application, the efficiency of the domain registration can reach very high levels (up to 98% efficiency in correctly assigning all pixels in the yolk domain) and largely depended on the accuracy of the selection of embryos for the correct developmental stage. It was found that generating embryos at a well-defined developmental stage is advantageous to maintain high standard in domain registration at a high throughput.

Besides the automated imaging pipeline a core promoter information resource was generated. The evaluation of the pixel values of the digital embryo images provided that the approach to bring enhancers in close proximity to core promoters outside of the chromosomal context provides conclusions on direct interactions between core promoters and enhancers defined by their inherent sequence-specific components. The screening of the interaction specificity of 19 different core promoters reflecting different gene ontologies resulted in ranking of promoters, which will aid in choosing promoters for CRM function and enhancer trapping assays (e.g.25). Notably, strong promoters were activated efficiently by enhancers, however, they also generated more ectopic expression (e.g. klf4). In contrast, weak promoters (such as hsp70 and eng2b) were also likely to interact with a variety of enhancers and in a domain specific manner and thus maybe useful in enhancer assays. However, the broad range of non-overlapping interaction specificities also detected in our study indicated that as yet unexplored sequence properties within both the enhancers and promoters influence interactions between them. This suggests a probable bias for the type and activity of enhancers that may be detected by a given enhancer trapping construct and underscores the importance of core promoter choice.

Summarizing, the method and system according to the present application advantageously provides a simple means of assessing the activity of reporter gene constructs either in transient or stable transgenic lines for tissue or domain specificity. Similarly, high throughput functional analysis of novel, putative CRMs predicted by bioinformatics can be performed by the system. Both image analysis protocols described in this application may also be used to detect developmental effects of toxicological and pharmacological compounds by high throughput screening of fluorescence labelled stable transgenic lines of zebrafish embryos. Moreover, genetic phenotype screens26 could utilise our method for the detection of fluorescence signals of reporter genes labelling subsets of tissues/cell types in the living zebrafish embryo.

As an example, image acquisition of up to 2 thousand embryos within 4 hours by a single microscope system may be carried out, wherein the microscope may be part of the system. In a different embodiment of the present invention, the system may be a part of a microscope. This speed also allows the image processing to follow within a similar time frame. As another example, the system/method may be scaled up to 10 thousand embryos per day without significant technological change (e.g. by increasing the rate of embryo production and extending the period of imaging). It may be advantageous to also carry out the process of embryo plating automated manner. In addition wells of arrayed plates with new geometries may be designed. The rate of imaging and image analysis achieved may be suitable for high-throughput screening applications demanded by compound screening and toxicological screening assays. Thus, the domain registration in 2-dimensional embryos may ultimately support the application of zebrafish in large scale biotechnology projects.

Core promoters

Core promoters were chosen from a pool of 37 zebrafish promoters that were isolated and functionally verified by reporter assays (Gehrig et al., manuscript in preparation; Table 1). The promoters were chosen by the following criteria: i) at least 1 verified transcriptional start sites was annotated to the genome sequence (zv7), ii) represented a diversity of gene ontology classes such as tissue-specific (apoeb), developmentally restricted (shh), ubiquitous (tbp), inducible genes (hsp70), iii) differentially require the function for the TATA binding protein (TBP) in their activity (27, J. Gehrig unpublished data). As negative control, the pbFOG promoter of Ciona intestinalis was used, which was transcriptionally silent in zebrafish (data not shown). Location of the main TSS region of genes was predicted using the DBTSS database and the ensembl genome browser (http://www.ensembl.org, Table 1). Additionally, promoter regions were confirmed by analysing the distribution of 5'ends of spliced ESTs in the UCSC genome browser (http://genome.ucsc.edu) in regions flanking the defined TSS region (Figure 1, Table 1).

Primers were designed to flank a region ranging between 107-227 bps incorporating the predicted main TSS region in cases where a dominant peak of TSSs was evident (Figure 1, Table 1). For most promoters however, no significant peak of TSSs data is available, in these cases primers were designed to include the highest possible number of potential TSSs within size constraints (Table 4)

Enhancers

Enhancers with defined spatial patterns of activity in the embryo were selected from the published literature or from our unpublished work. On the basis of functional verification by activating reporter gene expression in zebrafish embryos the following enhancers were chosen for the assay: shha ar-C (notochord, floor plate, hypothalamus), â-actin intron1 (ubiquitous), pax6b eye (retina and brain), eng2b CXE (midbrain-hindbrain boundary), eng2b reg5 (brain, this report), dre-mir9-1 (brain), myl7 (heart), myf5 somite (somites, myotomes), islet1 zCREST (sensory and motor neurons), dlx2b/dlx6a ei (forebrain), mnx1 regB (motor neurons). As a negative control, VC_909 a non-conserved, non-coding segment without enhancer activity from Takifugu rubripes was used. The activity of the PCR isolated enhancers was verified by reporter injections in fish embryos in conjunction with a test core promoter. The insertion of gateway vector derived DNA sequences between regulatory sequences and the venus reporter gene did not affect enhancerpromoter interaction.

Isolation of zebrafish core promoters and enhancers

Genomic DNA was isolated by conventional methods using a DNeasy Tissue Kit (Qiagen). PCR amplification of enhancer and core promoter fragments was carried out using Triple Master polymerase enzyme mix (Eppendorf) from zebrafish genomic DNA. The PCR amplification was performed in two steps, for the first reaction sequence-specific primers were used which contain a short adapter stretch. The first reaction was used as a template for the second PCR made with the adapter primers (See primer sequences in Table 3). Agarose gel-purification of the DNA fragments was carried out by SV Gel and PCR Clean-Up System (Promega).

Generation of multisite gateway entry clones and expression vectors

For the generation of Entry clones the PB recombination reaction was carried out between the PCR products of enhancers with B3 and B5 attachment sites and donor vector pDONR 221-P3-P5, or the promoter fragments linked to B1 and B2 attachment sites with the pDONR 221-P1-P2 as described with the primers listed in Table 3.

The reaction was transformed into chemically competent bacteria. The antibiotic resistant colonies were subjected to colony-PCR performed with entry clone specific primers (Table 3). Plasmids with the correct fragment size were isolated (QiaPrep Spin Miniprep Kit, Quiagen) and were verified by sequencing. For the generation of pSP72-B3-enhancer-B5::B1:core promoter:B2-VENUS expression clones, LR recombination reaction was carried out between a combination of one of each promoter and enhancer entry clone and the destination vector pSP72-R3-ccdB/CmR-R5::B1-ccdB/CmR-B2-VENUS as described. The reaction was then electroporated into electrocompetent bacteria. The antibiotic resistant colonies were selected by colony-PCR performed with expression vector-specific primers, and plasmids with the correct insert size were isolated as miniprep. The plasmids were validated by agarose electrophoresis following restriction digestion and diluted with nuclease-free water to a final concentration of 5ng/ìl for the generation of the injection solutions. Each injection solution contained 0,1% phenol red and 15ng/ìl cfp mRNA produced from the pCS2+::CFP construct by in vitro transcription (Message Machine, Ambion).

Fish keeping

Zebrafish (Danio rerio, AB) were maintained at 28˚ C, according to The Zebrafish Book. The developmental stages of the embryos were determined by their age (hours post fertilization, hpf) and by morphological features, as described by. Eggs were collected from pairwise and batch crossings within a short time window of 5-15 min after fertilization.

Microinjection and embryo handling

The solutions were microinjected through the chorion into the cytoplasm of one cell-stage zygotes between 15-25 min post fertilization. The embryos were raised at 300C in fish water containing 0.003% Phenylthiourea (PTU). The embryos were dechorionated at prim-5 stage with 10mg/ml Pronase (Sigma), and CFP fluorescence-negative embryos were discarded from further analysis. To assay reporter gene expression data prim-15 stage embryos were used in which the tissues, where the enhancers were expected to function are present. Microinjected embryos were plated in 96 well agarose embedded plates and oriented laterally by inserting the yolk ball of embryos into a concentric depression (500 $\mu$m diameter) in the agarose (Figure 1c).

HTS microscopy, imaging, data acquisition and data storage/processing

Imaging of the example 96 well plates was carried out on a "Scan^R" high content screening microscope (Olympus Biosystems) with a SWAP plate gripper (Hamilton) and a 2,5x objective (Plan-Apo) and an Olympus Biosystems DB-1 (1300x1024 pixels) camera in bright field and with CFP, YFP filter cubes. Image integration times were fixed (180ms for CFP and 1000ms for YFP) as an example setup. Different embodiments are possible. The light source was an ultra stable MT-20 (Olympus Biosystems) with a 150W xenon lamp as an example setup. Different embodiments are possible.. Central focal plane of the embryo was detected by an object detection Auto-focus algorithm as an example setup. Different embodiments are possible. Each embryo was acquired with four z-slices (55$\mu$m) as an example setup. Different embodiments are possible. Data management, thumbnail gallery generation and data compression was carried out via an assembly of LabView™ software modules (National Instruments).

Embryo detection and segmentation, domain specificity analysis

For detailed description of the algorithms applied, see below. In the following one example embodiment is described.

According to this embodiment, a combination of bright-field and CFP-images may be used to detect and register domains within a simplified two dimensional embryo outline. Embryos may be adjusted equally and erroneous images (malformed embryos, bad quality images, empty wells etc.) and outliers may excluded. Four Z-images may be combined to obtain maximum sharpness. Background yolk fluorescence and saturated areas may be deduced from the YFP images. A model describing the ventral and the dorsal body shape may be introduced. Yolk extension, yolk ball, midbrain-hindbrain and/or notochord were directly registered and 64 landmarks may be derived to determine characteristic points in each individual embryo. A learning classifier may be trained on the landmarks of 51 well-registered images and excluded erroneous registrations in the whole dataset. This training may include calculating a mean and a standard deviation and use this parameters as boundary conditions excluded erroneous registrations in the whole dataset. Based on a reliable registration tissue activities may be quantified in yolk, eye, skin, midbrain-hindbrain, brain, heart, notochord and/or spinal cord. For all acquired images of the same construct domain activities may be averaged. To visualize the outcome of only one construct all images may be warped onto a reference embryo and projected on each other. Projection may be done either by taking the maximum value or taking the mean value of these pixels.

Colorplot and interaction map

Each domain may be assigned a color and the activity of the domain may be shown by a color intensity. The maximum of the intensity may be assigned as 100% to the maximum Venus intensity value of the given domain within all experiments carried out. The color gradient may be non-linear, given by the root of the domain activity, and resulted in black for no activity. Enhancers and promoters may be assigned an expressivity value by averaging all eight domain activities for all constructs and subtraction of the activity of the control experiments with the same enhancer or promoter, respectively.

Specificity and interactivity

In an example evaluation for each promoter the mean proportion of signal within the expected domains for the 3 most specific enhancers (shha arC, eng2b CXE, isl1) was calculated (specificity). Also the theoretical mean proportion of random signal within expected domains was calculated. Additionally, the proportion of experiments of a promoter set exceeding the maximum of the controls was calculated (interactivity). The promoters were ranked according the interactivity value. The specificity and interactivity values were plotted in a X-Y plot.

Maximum and Mean projections

According to an embodiment, to visualize the tissue distribution of reporter activity by a construct all warped images (size: 549 x 359) of this construct may be projected to one 549 x 359-image. The pixel values of the projection image may be derived from all pixels in the warped images being located at the same position. Projection may be done either by taking the maximum value or taking the mean value of these pixels (see Figure 13).

Quantitation of fluorescence signal in a shh:gfp stable transgenic line

Hemizygous individuals of a shha:gfp stable transgenic line were crossed. The obtained embryos were microinjected with cfp mRNA, imaged and processed as described below. The individuals were manually analysed to judge their genetic background. The embryos were grouped into homozygous, hemizygous and non-transgenic individuals. Manual judgements were compared and assigned to the total GFP activity obtained by the fluorescence signal quantification data.

Merging Routine

Comparative analysis of spatial distribution of reporter activity may be carried out for experiments with minimum 30 embryos, as one example, that passed quality controls (Table 3). When the number of analysable embryos is lower than 30, further repeats of experiments may be carried out and experimental data merged after homogeneity check. To this end, discrete domain expression values may be introduced describing low, medium and high expressions (-1, 0 and 1). Domain specific expressions in all embryos of the repeats may be ranked and assigned a -1 if they belong to the 33% lowest, a 1 if they belong to the 33% highest expressions or 0 for the rest. Thus, the mean value of the discrete domain expression values for all repeats equals zero for each domain expression. For the individual repeat, the mean value x was unequal zero. The differences of the individual to the overall mean were calculated and a value between 0 and 1 was obtained. 0 stands for an identical distribution, 1 means that only one of the discrete domain expression values occur. This procedure may be repeated for each domain. Each variation (for each domain expression in each repeat) may be assigned a performance value according to

$$p = e^{\frac{x - \bar{x}}{x^2}} = e^{\frac{x}{0.25^2}}.$$

The two domain expressions with the highest variations per repeat may be cut off and all others of the same repeat may be multiplied to obtain a performance index. If this performance index is above the heuristic found threshold 0.1, the repeats may be merged.

Hardware and software used

An example embodiment of the system may comprise one or more of the following components: Data may be processed using MATLAB 5.3. Processing of the whole data may take 40 hours using seven computers (1x Intel Core 2 Duo 6700, 2GB RAM, 1 x Intel Pentium IV 3000, 1 GB RAM, 1 x Intel Pentium IV 2600, 1 GB RAM, 4 x Athlon 3800+, 2GB RAM). The data set may have a size of 1.29 TB and may be stored on a Thecus 5200. All visualizations may be directly derived from the data using MATLAB scripts.
Before describing the **Figures 5a - 5m** in detail, a brief discussion said figures follows. As can be seen from Figures 5a -5m, according the described specific embodiment, a simplified embryo detection, orientation and extended focus image generation is provided.

**Figure 5a** shows an original CFP image, 4 stacks. Image mask after filter application is shown in the left corner.

**Figure 5b** shows an adjusted CFP image after rotation and reflection.

**Figure 5c** shows a cropped extended focus image merged from the 4 CFP images.

**Figure 5d** shows a mathematical model for embryo outline regression. The difference between the real outline (red) and the outline model (black) is illustrated.

**Figure 5e** shows an embryo image with four characteristic points in the head and yolk region and an image coordinate. The modeled embryo outline is shown as a red line. Red square marks the tail region enlarged in Figure 5f.

**Figure 5f** shows a tail regions with search boundaries (yellow) for yolk plug detection. Red square marks region enlarged in Figure 5g.

**Figure 5g** shows a minimum of filtered brightness in a pixel-column in the tail marked by red ring.

**Figure 5h** shows a regression and error suppression of yolk extension detection.

**Figure 5i** shows a yolk detection by analyzing brightness distribution along straight lines. In the right lower corner an example brightness distribution along line 1 is shown. Green dot indicates corrected yolk ball landmark.

**Figure 5j** shows a distances of detected brightness minima of yolk detection lines (in red) to the center of the yolk (circled in red). The brightness minimum of line 3 is highlighted in green.

**Figure 5k** shows a midbrain-hindbrain detection by comparison of modelled embryo outline and brain outline. Maximum vertical difference between modelled embryo outline and brain outline marks the posterior border of the midbrain-hindbrain domain.

**Figure 5l** shows a detection of dorsal border of the notochord with search boundaries. CFP view of the tail region.

**Figure 5m** shows an embryo image with landmark points used in subsequent analysis highlighted (red dots).

Embryo detection and arrangement

According to a specific embodiment, in order to detect and register domains within a simplified two dimensional embryo outline, a combination of bright field and CFP-images may be used. Bright field images provide high contrast and internal structures, CFP-images allow detection of the morphology through reporter expression and by dirt suppression and removal of noise objects in the bright field images outside of the embryo.

To divide foreground from background an adaptive greyscale-threshold was applied to the lowpass-filtered CFP-image (convolution matrix 20x20, threshold determined by minimum in histogram) so that a black and white image is delivered.

Error-suppression may be implemented to remove noise and background signals: Erosion and dilation algorithms may be applied with a 4-neighborhood structuring element, as an example. Dirt objects may then be removed by deleting all pixels that do not belong to the largest binary object. Since in the shown example the center of the yolk ball lacked CFP fluorescence resulting in a hole, a filling algorithm was applied. A filtering routine with a convolution matrix of 20 x 20 pixels then smoothed the outline of the image and an adaptive threshold delivered the embryo outline (Figure 5a).

The embryos were adjusted, such that all embryos occupied the same area within the image by rotation and reflection of images. This was carried out by finding tail and head of the embryo and by performing a linear regression for the tail region using a straight line. The slope of the straight line to the horizontal defined the rotation angle (Figure 5b). Erroneous images (malformed embryos, bad quality images, empty wells etc.) were excluded from further processing by plausibility tests based on the number of embryo pixels (affected by CFP activity), height of the image and quality (see below). Embryos not reaching a minimum level of CFP activity and the 5% of embryos having the highest Venus expression (outliers) were excluded. To obtain maximum sharpness for each filter channel (BF, CFP, YFP) 4 Z-images were combined by an extended focus algorithm (Figure 5c). To this end, a 5-fold Wavelet-analysis (Daubechy wavelet, order 8) was applied to decompose each image into the highest frequencies and to recompose the extended focus image. The resulting image showed margins of 20 pixels above and below the embryo, 30 pixels left of the embryo and was cropped at 520 pixels from anterior end to contain the yolk extension fully (Figure 5c) and to save computation time. Then background yolk fluorescence and saturated areas were deduced from the YFP images.

Coordinate definition

According to a specific embodiment, the exact outline of the embryo was extracted from the cropped inverted monochrome CFP image.

The lightest pixels of the image were assumed to be embryo pixels, where nh was an average estimation of the pixels contained in head and tail (nh = 80000). Subsequently, filtering, erosion, dilation and hole filling were applied as described above. The resulting image was used to define the outline. To obtain a robust outline and to avoid disturbances and noise effects a nonlinear model-based optimization was applied (Figure 5d). To this end, a model function for the ventral and the dorsal side was introduced. As model for the ventral side, three circles with radius $r_0$, $r_1$, $r_2$ and center points $(x_0, y_0)$, $(x_1, y_1)$, $(x_2, y_2)$ and a straight line were connected (Figure 1d). The first two circles basically describe the head and the yolk of the zebrafish, the third circle and the straight line describe the tail region. The initial parameters for the first two circles can be set arbitrarily, the third circle was defined by a radius and an angle $\varphi 1$ and was connected to the second circle with identical slope. The straight line was defined by a constant length and an angle $\varphi_2$ where it was connected to the third circle with identical slope. Now the parameters $x_0$, $y_0$, $r_0$, $x_1$, $y_1$, $r_1$, $x_2$, $y_2$, $r_2$, $\varphi_1$,

$\varphi_2$ needed to be optimized to match the found outline best. To secure, that circle $c_0$ and circle $c_1$ cross each other

$$DL = \sqrt{(x_0 - x_1)^2 + (y_0 - y_1)^2} < r_0 + r_1 \qquad (1)$$

had to hold. Thus,

$$r_1 > \sqrt{(x_0 - x_1)^2 + (y_0 - y_1)^2} - r_0 . \qquad (2)$$

Next, we introduced a parameter a with

$$r_1 = \sqrt{(x_0 - x_1)^2 + (y_0 - y_1)^2} - r_0 + a \qquad (3)$$

and did not optimize $r_1$ but a. To improve the result for a large number of embryos with varying shapes, 10 initial parameters sets were used and optimized by a nonlinear gradient search algorithm. The resulting curve was called $y_{ventral}(x)$. The model for the dorsal side consists of one circle and one straight line connected with identical slope and was optimized similarly. The resulting curve was described by a curve $y_{dorsal}(x)$.

Summarising the above, circles and straight lines are adapted and the square area between the model based on said circles and straight lines and the outline which has been experimentally defined are minimised. For minimisation, nine parameters may be used. However, it might be problematic that all elements have to be connected. Hence, based on the mathematical assumption introducing the distance DL between the center of the circle $c_0$ and the circle $c_1$, the parameter $r_1$ can be replaced by another parameter a which is used for optimisation. Since optimisation is critically dependent on a boundary conditions and may fail due to local minima, good initial values for the parameter set is necessary. Hence, 10 different initial values sets may be used for the parameters set in order to use the most proper one and obtain the best results.

Another 4 characteristic points were calculated/defined (Figure 5e): the front end of the embryo ($x_{left}$, $y_{left}$), the contact point of head and yolk (($x_{cont}$, $y_{cont}$), crossing of circle $c_0$ and circle $c_1$), the most top point the embryo ($x_{top}$, $y_{top}$), and the starting point of the tail (($x_{taol}$, $y_{tail}$) with $x_{tail} = x_2 - r_2 \sin\Theta$, $y_{tail}, = y_2 - r_2 \cos\Theta$, $= \varphi_1 - \varphi_2/2$).

Embryo feature generation

The dorsal border of the yolk extension was detected in the bright field image by finding minima of the filtered brightness in vertical cross-sections of the tail (Figures 5e-g). Therefore, at each pixel-column $x_{yp,i} = x_{tail}, ..., x_{max}$ the vertical pixels from $y_{dorsal}(x_{yp,i})$ to $y_{ventral}(x_{yp,i})$ were extracted (Figure 5f).

The top 35% and the last 20% were omitted (yellow lines 10 in Figure 5f) and the brightness of the remaining pixels was lowpass filtered. The minimum was assumed to be a yolk extension pixel (Figure 5g). This operation was repeated for all pixel-columns. All found minima were used to calculate a straight line linear regression (Figure 5h). Outliers 12 were removed and the regression line was recalculated and the yolk extension line 14 $y_{yp}(x)$ was obtained.

Yolk ball detection was an iterative function, starting with the calculation of a center point $X_c = (x_c, y_c) = (0.5(x_{cont} + x_{tail})/ \min(y_{cont}, y_{tail}))$. 24 straight lines with equal angle changes of 15° were drawn from the center point to obtain a brightness distribution (in Figure 5i, first three lines enumerated, black arrow: brightness distribution of line 1).

The brightness was lowpass-filtered (zero phase forward and reverse filtering, p=0.5) and the minimum was assumed to be the border of the yolk. Outliers 16 were found by a plausibility check and corrected 18 and the procedure was repeated (Figure 5i, white arrow). Then, the distance from the center to the assumed yolk points 20 was filtered (same filter, p=0.8, Figure 5j) and the points were recalculated. The yolk points were called $X_{yolk,i} = (x_{yolk,i}, y_{yolk,i})$, the mean of all found yolk points delivers a new yolk center. The method was repeated three times with iteratively calculated yolk centers.

To detect the cerebellum outline 22 a rectangle with x-coordinates from $x_{left}$ to $x_{cont}$ and y-coordinates from $y_{top}$ to $y_{left}$ was cut out the CFP image, and a filter chain consisting of lowpass filtering, threshold calculation, opening/closing and BLOB detection was applied (Figure 5k). As the CFP above the cerebellum region does not show intensive fluorescence, the hindbrain outline could thus be obtained. The maximum difference between hindbrain outline and model-based embryo outline was assigned to be the end of the cerebellum.

The notochord 24 was recognized by applying an anisotropic filter (Figure 5l) to the bright field image assuring that the faint notochord line was amplified: Pixel-columns at $x_{nc,i} = x_{tail}$, ..., $x_{max}$ were extracted between dorsal side of the tail and the yolk plug (which may also be referred to as yolk extension) $(y_{dorsal}(x_{nc,i}) ... y_{yp}(x_{nc,i}))$. The top 30% and the last 45% were omitted and the brightness minimum was calculated according to the yolk plug detection. However, instead of a regression a simple lowpass filter was applied to the found minima due to the better quality of the signal.

The found tissues and lines were used to derive 64 landmarks 26 (red dots in Figure 5m). These landmarks 26 determined characteristic points in each individual embryo.

Regarding the above described process applied for obtaining the embryo, the histogram is calculated and the threshold will be set after the first peak in the histogram. This represents the background. Hence, all other objects will be maintained. As an advantage, it is not necessary to define a fixed number of pixels which are to be found. Hence, it is not necessary to know how many objects are within an image.

Regarding figure 5d, in order to detect the outline of the embryo, it is used that at least the head of the embryo and the beginning of the tail have to be included in the image. Accordingly, the binary image is calculated such that parameter driven number of pixels maintains, which represent the embryo. The number of pixels may be a predefined number. It has been found that a number between 80 000 and 105 000 pixels was usable.

Regarding figure 5k, also here it is known that the brain has to be present in the digital image. However, it is not known how large the area representing the brain in this picture is, so that, contrary to figure 5d, no fixed pixel number can be given. However, it can be used that it is known that roughly half of the image may be filled by the brain. Hence, half of the number of pixels in this section of the digital image are used as a threshold for calculating the binary image.

Embryo classification

To exclude images with erroneously generated features a classifier was designed. The classifier evaluated the following morphological properties and measures:

1) variation in thickness of yolk extension: $\dfrac{y_{yp}(x_{max}) - y_{yp}(x_{tail})}{y_{ventral}(x_{max}) - y_{ventral}(x_{tail})(x_{max} - x_{tail})}$ ,

2) horizontal distance of middle of yolk and beginning of the tail $x_{tail}$-$x_c$,

3) horizontal distance between the head and its contact to the yolk: $x_{cont}$-$x_0$,

4) quality parameters of outline model optimisation,

5) vertical distance of yolk and tail: $y_{yolk}$,-$y_{top}$,

6) horizontal distance of the embryo's front end to the cerebellum landmark.

Based on these features a trainable sorting routine was built. 51 images, which were correctly registered with landmarks were manually picked and subjected to the routine and features were calculated. These features defined the extremities of allowed features calculated for all other images. Embryos, which did not fulfill the restrictions were discarded from further analysis.

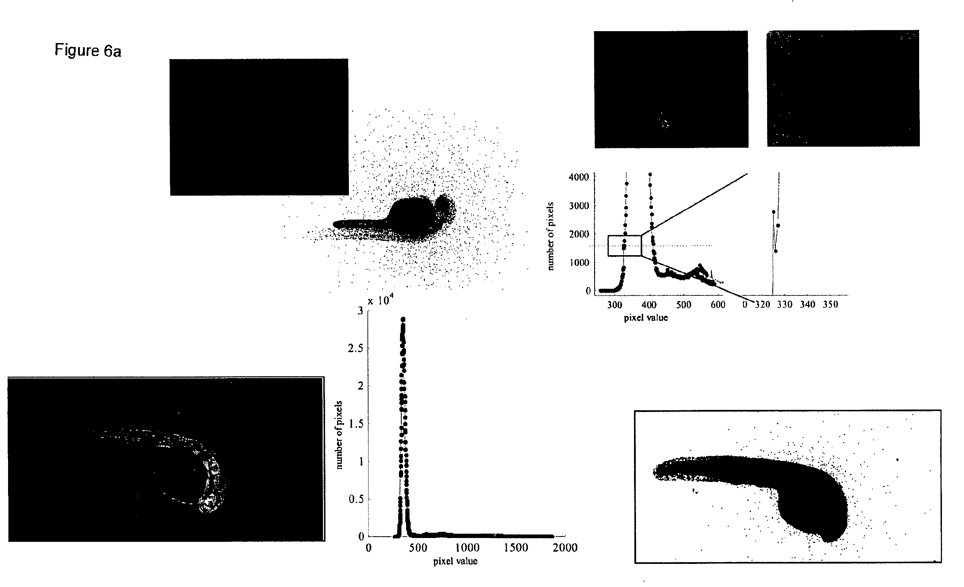

**Figures 6a to 6e** provide further details regarding the embryo detection as depicted in figure 5a. In particular, figures 6a to 6e describe filter processes applied when carrying out embryo detection.

Filtering usually comprises one or more of the following:

Calculating a threshold using a histogram and generating of binary image on the basis of this threshold. Details of obtaining the binary image are shown in **figure 6a,** wherein the next threshold is applied by using the second intersection with the mean value in the histogram as shown in figure 6a. In particular, on the left-hand corner of figure 6a, a digital embryo image is shown. On the right-hand side of said digital embryo image, a histogram is shown. A magnification of a portion of said histogram is shown in figure 6a as well as a magnification of the magnification, which allows to clearly indicate the cross-section of the mean value with the histogram. On the lower right-hand side, there is shown the outcome of applying the binary filter using the specific threshold value and the histogram identifying the embryo as well as specific outliners. Moreover, on the upper left-half, there is shown a digital embryo image having a CFP-intensity that is too low for proper detection.

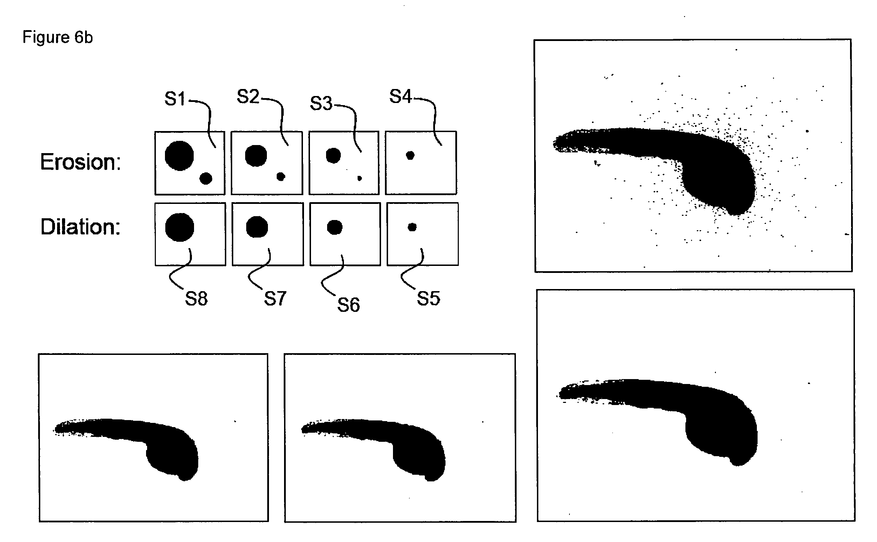

**Figure 6b** shows how an erosion/dilation method works. Using erosion, dirt which is connected to the embryo cannot be removed by a BLOB-detection (details see below). However, such artefacts originating from dirt may be removed using erosion and dilation as can be seen in figure 6b. Artefacts below a specific size will be deleted by erosion and will not maintain in the figure when dilation is carried out. However, as can already been seen from the larger figures in figure 6b depicting an embryo to which erosion/dilation is applied, the contour becomes fuzzy.

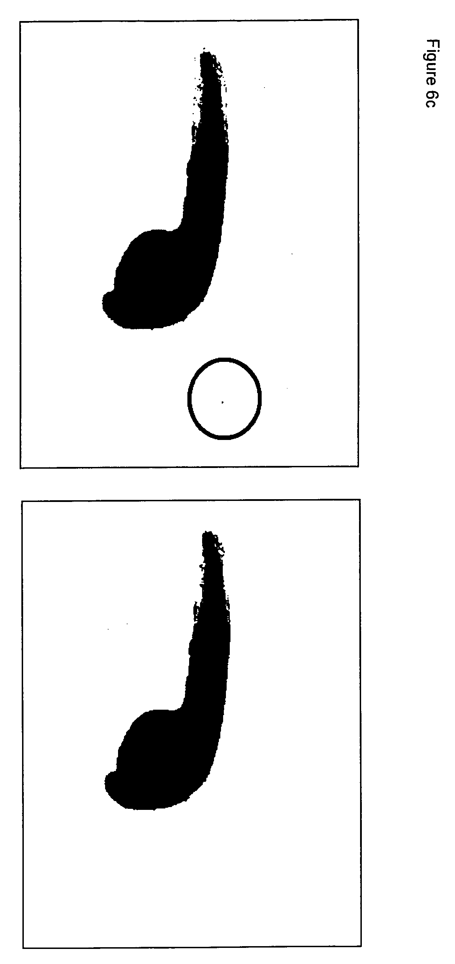

**Figure 6c** shows how BLOB-detection is carried out. In particular, BLOB-detection may comprise subtraction of all objects that are not connected to the main object. However, large dirt objects in particular such which are bigger than the entire embryo cannot be deleted or pose problems because the embryo might accidentally be deleted. In addition, as already indicated above, dirt artefacts that are connected to the embryo cannot be deleted.

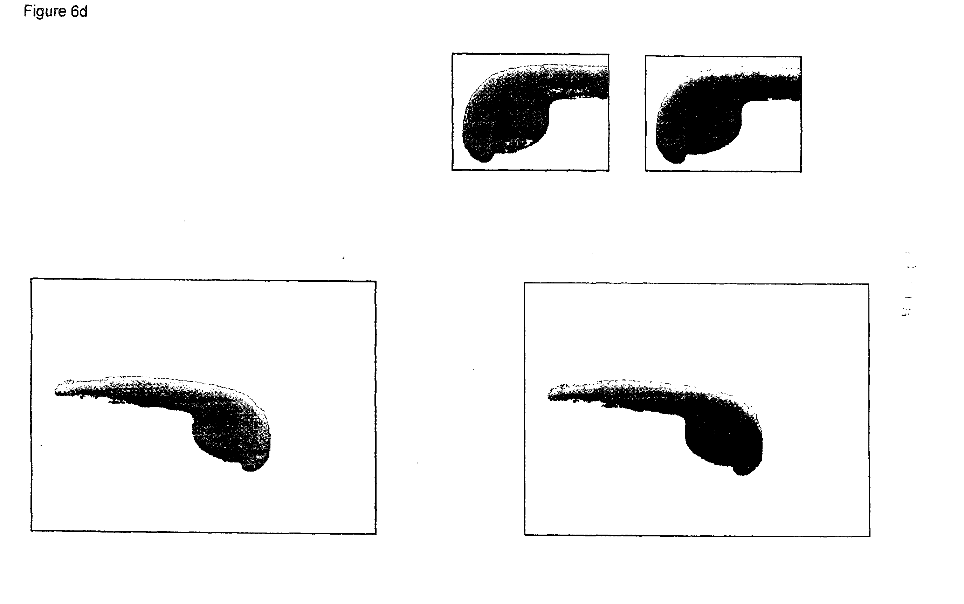

**Figure 6d** shows a representation of application of a hole filling algorithm. In particular in this example, holes in the yolk ball are filled by this algorithm. However, such a hole filling algorithm may use high computation time. Moreover, open holes may not be filled, as can be seen in the lower images of figure 60, wherein in the tail region, open holes are not filled.

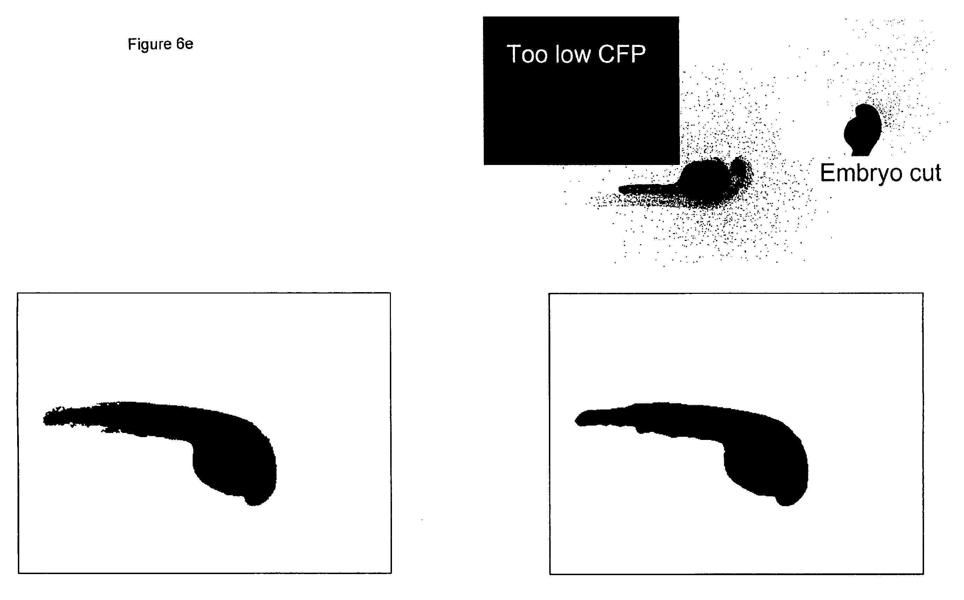

**Figure 6e** shows as an example low pass filtering. In particular, figure 6e shows application of a filter process using as an example a convolution matrix having the size of 20 x 20. However, also filtering uses a lot of computation time and if e.g. the tail is too small, the tail is cut, as can be seen on the upper right-hand side of figure 6e. Moreover, such a filtering may include a first plausibility check according to which, if the number of pixels that are assigned to an embryo is too small, results in not using said image for further processing.

As described with respect to figures 5a, 5d and 5k, filtering is applied, wherein the specific filtering algorithms differ from each other in the calculation of the histogram as well as the calculation of a threshold. Each threshold represents a value in grey scale. If the value of the respective pixel is larger than the threshold, the image is black, if the value is lower than the threshold, the image is white.

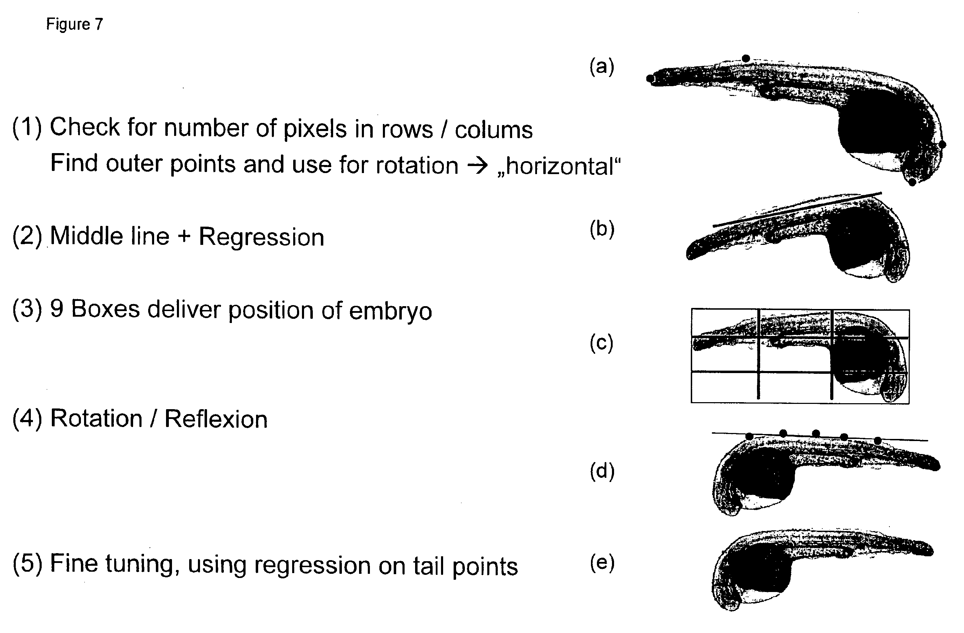

**Figure 7** shows a method used for aligning the embryos in the respective digital embryo images such that all embryos are similarly aligned, as described with reference to figure 5b. According to **figure 7a**, in a first step, the outer points of the embryo are searched by checking the number of pixels in rows and columns. In particular, the most left one, the most right one, the top one and the lowest point are identified, as can be seen in figure 7a. The largest distance between these four points defines a horizontal axis which will be rotated until this horizontal axis is horizontal, i.e. parallel to the y-axis in the co-ordinate system of the original image. **Figure 7b** shows a subsequent step, according to which in each column, the center point is identified and a middle line is defined. Using a straight line linear regression, a further axis is defined which is assumed to be a new horizontal axis. Again, the image is rotated until this newly found axis is substantially horizontal.

Subsequently, the image is divided into nine equal regions, in order to find out whether the tail is on top or on bottom and whether the head is left or right. If necessary, the embryo will be rotated and/or reflected as can be seen from **figures 7c and 7d.**

Subsequently, five points of the outline of the tail are extracted which are approximated using a thread line linear regression which then is arranged such that this line is horizontal as can be seen from **figures 7d and e**, wherein figure 7e shows the final orientation of the embryo.

In order to avoid wrong/corrupt digital images, a possibility check regarding the picture can be carried out.

Depending on the number of different/differing images, this processing method may be difficult to carry out, in particular may consume a lot of computation time. Moreover, as a result the tail might touch the margin.

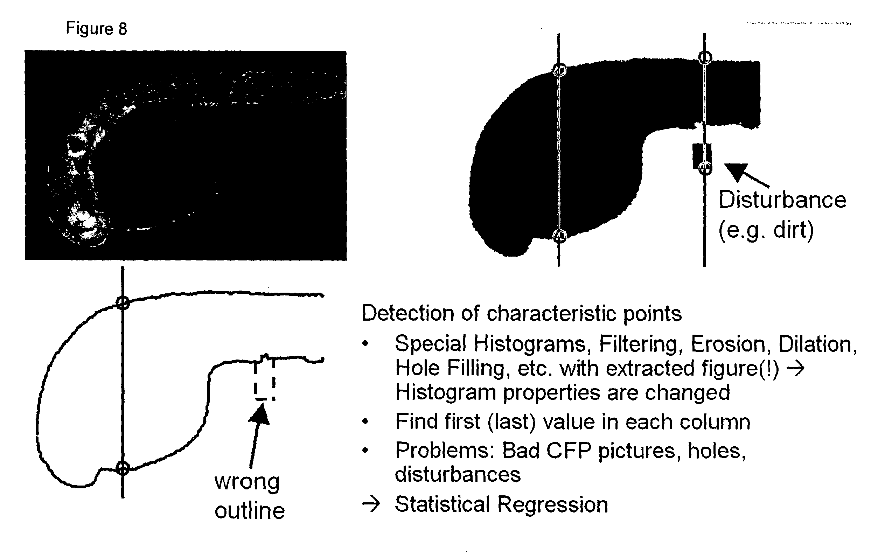

**Figure 8** shows an overview how to obtain the outline of an embryo and a digital embryo image. As described, special histograms, filtering, erosion, dilation, hole filling etc. may be applied with extracted figure/image of an embryo. Moreover, histogram properties may be changed. Then, first and or last values in each pixel column may be used which nevertheless be difficult when using CFP pictures having bad signal ratio, holes, disturbances etc. Moreover, statistical regression may be used.

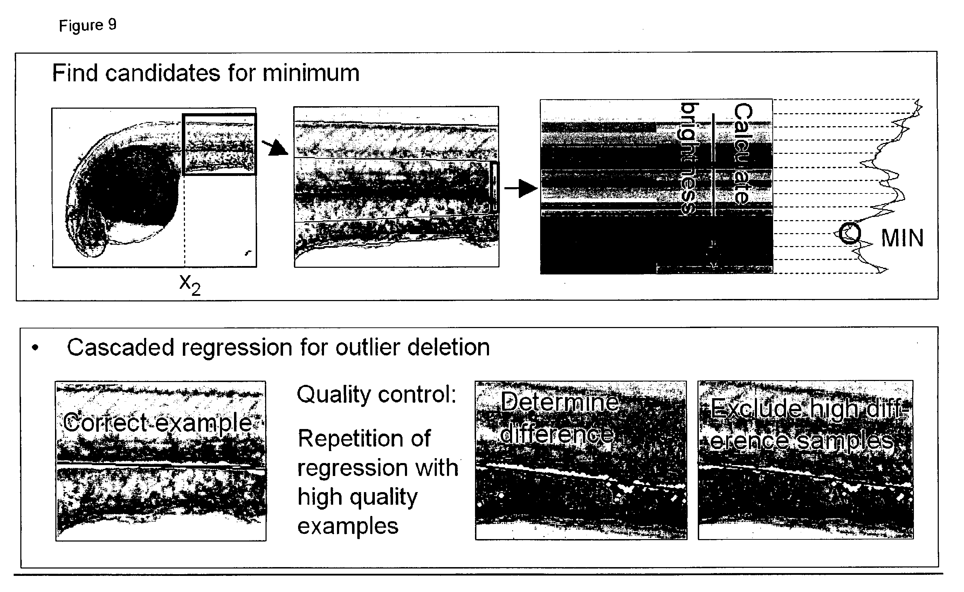

**Figure 9** is an expanded view of figures 5e, f, g and h. In particular, figure 9 shows the result of straight line linear fit for an example digital embryo image that does not contain outliers (referred to as "correct example in the lower left corner of figure 9). However, in case outliers are detected, such outliers are deleted and again a straight line linear regression is carried out as can be seen in the lower right-hand corner of figure 9.

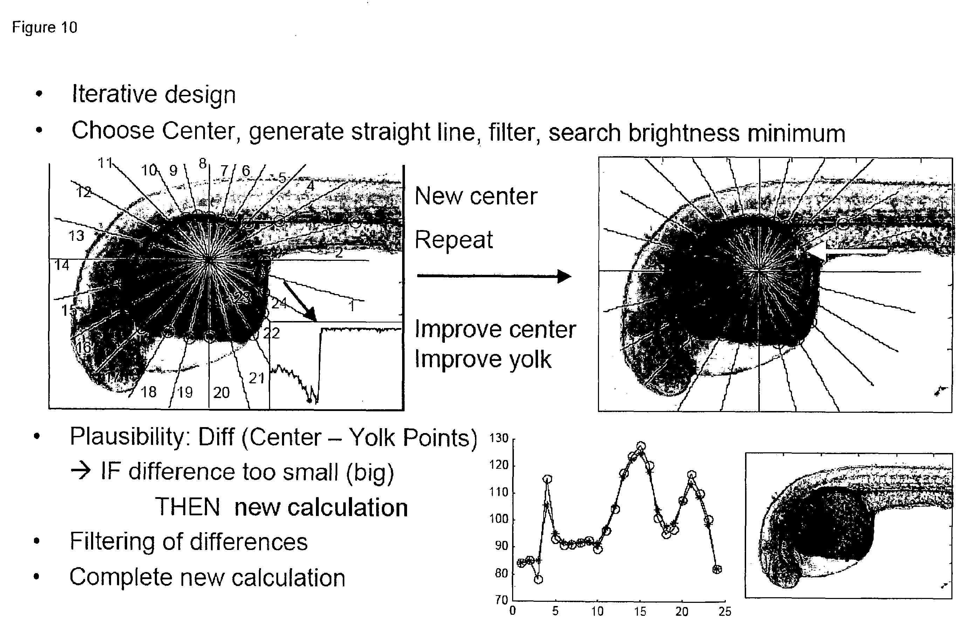

**Figure 10** shows a more detailed view of the process described with regard to figures 5i and j regarding the iterative process for obtaining the correct yolk ball center. As can be seen in the lower left hand part of figure 10, a yolk center is chosen using a simple initial approximation. 24 lines are arranged through the yolk center at equal angle at distribution. For example the intensity distribution of a long one line is shown in the left hand image of figure 10. The minimum of intensity is identified and regarded as a yolk ball outine point. As can be seen, in line 3, the intersection of line 3 with the yolk extension provides the intensity minimum. Hence, in line 3 the yolk outline point is determined incorrectly. In order to identify such wrong yolk ball outline points, the difference between the center and the yolk ball outline points is calculated. If the difference is too small or too big, then a new calculation is carried out. As an examples, a region may be defined, in which a yolk ball point is estimated to be found. This region may be fixedly defined in advance. It is also possible, that this region is calculated based on the a number of neighbouring points. Such calculation may be carried out using an averaging approximation, the mean and the standard deviation therefrom, etc.. The difference may also be filtered, as can be seen in the diagram on the lower part of figure 10. As can be seen on the right hand image in figure 10, the yolk ball outline point with respect to line 3 has been moved inwards.

After filtering of differences, the new calculation may be carried out. The final result can be seen in the lower right hand corner of figure 10, indicating 24 yolk ball outline points defining the outline of the yolk ball.

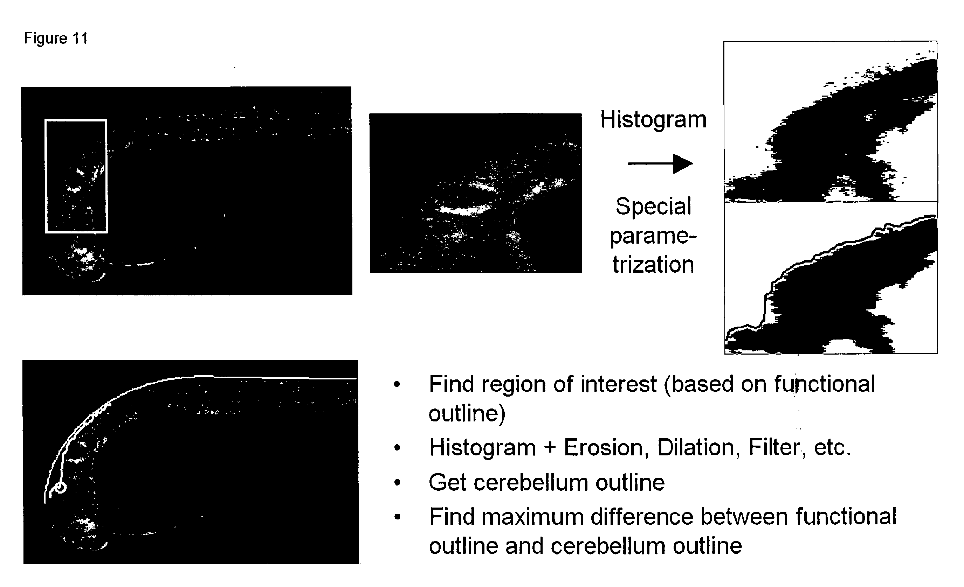

**Figure 11** shows a detailed magnified view of the process carried out with respect to figure 5a. Based on the functional outline, a region of interest is identified, as shown in the upper left image in figure 11 indicated by the red box. A magnified view of the content of the red box is shown on the right hand side of said image. A histogram of said box is shown on the right hand side of figure 11, wherein using a special parametrisation, including histogram application, erosion, deviation, filtering, etc., the outline of the dark region is provided. This represents the outline of the cerebellum. By obtaining the maximum difference between the outline as defined using a process defined regarding figure 5d and the cerebellum outline, the end of the cerebellum is defined.

Before describing **Figures 12a - 12n** in detail, a brief description of said figures is provided. Figures 12a - 12n show a generation and validation of reference embryo shape with segmentation domains.

**Figure 12a** shows a mean position of reference landmarks from 12,582 embryos (which is an example of E') generating reference shape (red dots) with confidence interval circles (25%, 75%).

**Figure 12b** shows a single embryo in which tissue domains were manually marked by colors. Colors are as in Figure 12c.

**Figure 12c** shows two-dimensional reference embryo made by the reference landmarks shown in a and addition of tissue domains based on manual referencing of 26 embryos as shown in Figure 12b.

**Figures 12d-f** are similar to figures 12a-c, created for a reference embry of sample of an age of 48h (long-pec stage). Hence, figures 12d-k show a validation of domain assignments using 23 manually marked embryos of an age of 48h (long-pec stage).

**Figure 12d** shows a mean position of landmarks generated from 23 long-pec stage embryos.

**Figure 12e** shows manually marked tissue domains of a long-pec stage embryo. Colors are as in Figure 12c.

**Figure 12f** shows two-dimensional long-pec stage reference embryo using reference landmarks as in d and addition of tissue domains based on manual referencing of 23 embryos as shown in Figure 12e.

**Figures 12g-n** show a validation of domain assignments using 29 manually marked embryos (details in Table 6). Figure 12g shows a yolk domain, Figure 12h shows an eye domain, Figure 12i shows a skin domain, Figure 12j shows a brain domain, Figure 12k shows a midbrain-hindbrain domain, Figure 12l shows a heart domain, Figure 12m shows a notochord domain, and Figure 12n shows a spinal cord domain. Abbreviations as in Figure 3.

Domain specific fluorescence signal quantification

To detect tissue activity, arbitrary embryo domains were defined (**Figure 12b**).

The spinal cord domain is bordered anteriorly by a vertical bar at 2 otic vesicle lengths posterior to the otic vesicle (bars in Figure 12b). The territory posterior to this position covers the area between the notochord and the skin (also including somites).

The brain domain was defined as the region anterior to the spinal cord excluding the notochord, the MHB and the retina.

The notochord domain encompasses the notochord and starts anteriorly below the anterior end of the otic vesicle (long bar in Figure 12b).

The midbrain hindbrain boundary (MHB) domain contains the MHB bordered by the two prominent vertical furrows anteriorly and posteriorly of the MHB, respectively. It includes tissues of the posterior part of the tectum and tegmentum, cerebellar tissue and tissue of rhombomere 1.

Ventrally the domain extends to the floorplate. The eye domain contains the retina region including the lens placode and tissues between the eyes.

The skin domain contains a stripe of a single cell width at the outline of the embryo. The defined region contains mainly skin cells of the midsection and overlaps partially with the median fin fold.

The heart domain contains a curved keel shape territory bordered by the embryo proper from dorsal and the yolk cell from ventral and the anterior boundary was arbitrarily set by a line between the anterior tip of the brain (otic vesicle) and the ventral joint between the yolk ball and yolk extension (transverse line in Figure 12b).

To bring tissues and organs in all images to the same position a warping routine projected all embryos onto a reference embryo with reference landmarks. The warping routine created a deformation field to match the landmarks.

The reference embryo was calculated the following way:

Starting with an empty image (called reference image), reference landmarks 28 were derived from the mean of x- and y-coordinates of each landmark in over 12000 embryos. A reference image containing 64 x- and y-coordinates of reference landmarks was obtained with an image width of 549 pixels and an image height of 359 (Figure 12a). To assign each pixel in this image a domain and thus define the reference embryo, in 26 randomly picked bright field embryo images (as an example of E"), domains were defined manually (Figure 12b).

Landmarks were calculated and the 26 embryos were warped onto the reference landmarks in the reference image. Thus, each pixel in the reference image was related to 26 domain assignments, ideally 26 times the same assignment. A pixel in the reference image was assigned a domain, if this domain was the dominant domain out of the 26 domain assignments and if at least 30% of the 26 domain assignments were of this domain. As the skin was a very faint structure and a broader domain was needed, it was already assigned if at least 10% of the pixels showed skin assignment. The resulting definition of domains in the reference embryo is shown in **Figure 12c.**

All acquired images were warped/mapped onto this reference embryo (resulting in (549 x 359) images) and domains in the embryos were given by the domain definitions of the reference embryo. Tissues with no or few landmarks were reliably warped by interpolating the deformation field between the landmarks. To quantify domain activity, pixels $p(i, j) \in [0, p_{max}]$ in an image (8-bit images with $p_{max} = 255$) were assigned a class label $c(i; j)$ which was

- 0 for background pixels,
- 1 for yolk domain,
- 2 for eye,
- 3 for midbrain-hindbrain,
- 4 for brain,
- 5 for skin,
- 6 for heart,
- 7 for notochord and
- 8 for spinal cord.

Pixels belonging to a class k were gathered in a set $C_k$ with the cardinal number $C_k$.

$$C_k = \{(i, j) \mid c(i, j) = k\}, c_k = card(C_k). \tag{5}$$

To assign a domain an expression grade, all pixels of this domain had to be assigned an expression grade. We defined a minimum threshold for expression by means of mean-value $P_0$ and standard-deviation $\sigma_0$ of the image background given by

$$\overline{p_0} = \frac{1}{c_0} \sum_{(i,j) \in C_0} p(i, j) \tag{6}$$

$$\sigma_0 = \sqrt{\sum_{(i,j) \in C_0} \frac{(p(i, j) - \overline{p_0})^2}{c_0 - 1}}. \tag{7}$$

A pixel was taken as expressed if a threshold $p_{thresh} = \overline{p_0} + 3\sigma_0 + \varepsilon$ was exceeded where we used a heuristic value of $\varepsilon = 5$. We define the expression grade $e(i, j)$ of the pixel as

$$e(i, j) = \frac{p(i, j) - p_{thresh}}{p_{max} - p_{thresh}}. \tag{8}$$

The expression grade E(k) of a domain was the area-normalized sum of expression grades for pixels of the same domain

$$E(k) = \frac{1}{c_k} \sum_{(i,j) \in C_0} e(i,j) \in [0,1].$$ (9)

**Figures 13a-13o** show a comparison of projection methods for analysing transgene activity in zebrafish embryos.

**Figures 13a-13f** show embryos injected with the shha arC:krt4 construct and CFP mRNA. (Figures 13a, 13d show a single embryo, figures 13b,13e show a maximum projection and figures 13c, 13f show a mean projection. CFP filter views are given in figures 13a-13c and YFP filter views are given in figures 13d-13f.

**Figures 13g-13i** show embryos injected with the 2.2shh:gfp:ABC construct.

Figure 13g shows a single embryo, figure 13h shows a maximum projection, and figure 13i shows a mean projection.

**Figures 13j-13o** show embryos of the 2.2shh:gfp:ABC stable transgenic line.

Figures 13j-13l show prim 15 stage embryos and figures 13m-13o show long-pec stage embryos.

Figures 13j,13m show single embryos, figures 13k,13n show maximum projections and figures 13l,13o show mean projections.

In figures 13b, 13c, 13e, 13f, 13k, 13l 65 embryos/digital embryo images were manually picked (for optimal orientation and staging quality) from the respective image folders and projected onto the reference embryo shape.

The data in figures 13h, 13i, 13n, 13o was created from all experimentally available embryos without prior selection.

Reproducibility of experiments

To demonstrate reproducibility of domain specific transgene activity four repeats of the injection experiment using the *shha arC::krt4* construct were carried out (Table 5).

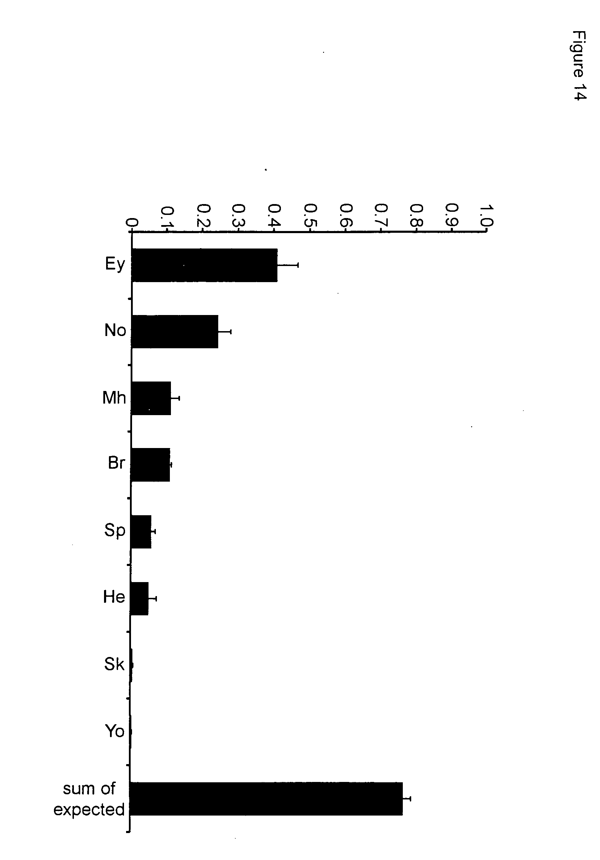

For each repeat the proportion of signal within the 8 segmentation domains was calculated. Additionally, the proportion of signal within the expected domains (brain, retina, notochord) was determined. The expression in the Mh domain is due to partial overlap of the *shha arC* activity domains with the defined Midbrain-hindbrain domain. The reproducible pattern of spatial signal distribution is illustrated by the mean proportion of signal of 4 repeats as illustrated in **Figure 14.**

**Figure 14** represents the reproducibility of domain registration in microinjected zebrafish embryos. Bar chart diagram of 4 repeats of an injection experiment with the construct *shha arC:krt4.* Mean percentage and s.e.m of Venus signal in the tissue domains detected in the repeats are indicated. Numeric data is in Table 5. Abbreviations as in Figure 3.

Validation of domain assignment with landmarks

Domain assignment validation was done in 29 randomly selected and 30 embryos preselected for for correct developmental stage (prim-15), in which segmentation domains were manually marked. The automatic image processing routine generated landmarks, applied the classifier and projected the images onto the reference embryo shape.

Each pixel in the projected image was given a domain assignment based on the reference embryo domains (see Figure 12c). This assignment was compared to the assignment given by the manually marked domains (data for the random selected embryos are shown in Figures 12d - 12k). The domain assignment validation indicated an average accuracy of 81.4%, independent from age differences, position, orientation and size of the embryos in the random selected embryos and 86% for the stage selected embryos. Results for both sets of embryos are shown in Table 6. The last rows of tables for each set in Table 6 show whether a tissue is over- or underrepresented in the quantification, the last column shows what proportion of the marked tissue pixels are assigned by the protocol.

**List of Reference Numerals**

1 , 2, 3    lines
10          line

| 12 | outlier |
|----|---------|
| 14 | yolk extension |
| 16 | outlier |
| 18 | corrected point |
| 20 | yolk ball outline point |
| 22 | cerebellum outline |
| 24 | notochord |
| 26 | landmarks |
| 28 | reference landmarks |

**Tables**

**Table 1: Overview of promoters used in this study**

| Gene symbol | Chromosomal Position zv#7 | Strand | Ensembl Transcript | Total Number of Spliced ESTs and zebrafish mRNAs from Genebank | TSS Distribution | length | ensembl TSS | main TSS position | Most 5' TSS | Most 3' TSS | functional with proximal upstream promoter at 50% epiboly | functional in conjunction with an nhancer |
|---|---|---|---|---|---|---|---|---|---|---|---|---|
| apoeb | chr16: 24388715-24388903 | + | ENSDART00000058965 | 627 | dominant | 189 | 111 | 110 | 44 | 146 | n/a | + |
| atp6v1g1 | chr5:50839078-50839225 | + | ENSDART00000036331 | 197 | dominant | 148 | 87 | 67 | 4 | 148 | n/a | + |
| gtf2a1 | chr20: 12836731-12836899 | + | ENSDART00000006443 | 75 | broad | 169 | 122 | n/a | 60 | 167 | n/a | + |
| klf4 | chr2:27760887-27761017 | + | ENSDART00000056655 | 24 | broad | 131 | 84 | n/a | 58 | 117 | n/a | + |
| krt4 | chr6: 29,881,458-29,881,623* | -* | ENSDART00000012644* | 365* | dominant | 166 | n/a | 82 | 76 | 152 | 68,48% (n=92) | + |
| krt4 | chr6: 26,288,946-26,289,102" | - | ENSDART00000012644 | 604 | dominant | 157 | 88/92 | 75 | 69 | 156 | 69,48% (n=92) | + |
| | | | ENSDART00000104080 | | | | | | | | | |
| ndr1 | chr21: 11382506-11382652 | - | ENSDART00000079692 | 5 | no conclusion | 147 | 87 | n/a | 58 | 127 | n/a | + |
| pcbp2 | chr9:614661-614812 | - | ENSDART00000025885 | 110 | broad | 152 | 99 | n/a | 51 | 150 | n/a | + |
| rdh10 | chr2:24616214-24616320 | + | ENSDART00000004903 | 211 | dominant | 107 | 106 | 84 | 25 | 106 | n/a | + |
| tbp | chr13: 24702224-24702404 | + | ENSDART00000016211 | 110 | broad | 181 | 66 | n/a | 29 | 124 | n/a | + |
| tram | chr24: 17550732-17550953 | + | ENSDART00000004664 | 105 | broad | 222 | 29/157 | n/a | 29 | 218 | n/a | + |
| | | | ENSDART00000105973 | | | | | | | | | |
| c20orf45 | chr6:58935813-58935969 | + | ENSDART00000008243 | 90 | broad | 157 | 93 | n/a | 20 | 157 | n/a | + |
| ccne | chr7:43205849-43206021 | - | ENSDART00000007883 | 23 | dominant | 173 | 110 | 110 | 25 | 147 | n/a | + |
| shha | chr7:36664074-36664254 | - | ENSDART00000099204 | 5 | no conclusion | 181 | 40 | n/a | 40 | 159 | n/a | + |
| mef2d | chr16: 20571360-20571520 | + | ENSDART00000009826 | 21 | broad | 161 | 89 | n/a | 85 | 137 | n/a | + |

| Gene symbol | Chromosomal Position zv#7 | Strand | Ensembl Transcript | Total Number of Spliced ESTs and zebrafish mRNAs from Genebank | TSS Distribution | length | ensembl TSS | main TSS position | Most 5' TSS | Most 3' TSS | functional with proximal upstream promoter at 50% epiboly | functional in conjunction with an nhancer |
|---|---|---|---|---|---|---|---|---|---|---|---|---|
| dre-mir9-1 | chr16: 20549606-20549799 | - | ENSDART00000070292 | 2 | no conclusion | 194 | 109 | n/a | 184 | 185 | 4,7% (n=149) | + |
| elp4 | chr7:8747729-8747891 | - | ENSDART00000002498 | 25 | broad | 163 | 57 | n/a | 57 | 156 | n/a | + |
| hsp70 | chr3:23548288-23548436 | + | ENSDART00000010477 | 5 | no conclusion | 149 | 102 | n/a | 87 | 106 | n/a | + |
| eng2b | chr2:24409903-24410129 | + | ENSDART00000056748 | 10 | no conclusion | 227 | 167 | n/a | 120 | 183 | n/a | + |

(*) is based on zv#6
(**) is determined by BLAT
dominant: if more than 20% of 5' ends ofESTs/mRNAs map to a singlent
no conclusion: if less than 20 EST/mRNAs can be mapped to the promoter region

EP 2 278 548 A1

**Table 2: Overview of enhancers used in this study**

| Symbol | Name | Size | Genome | Chromosomal position | Expected tissues | Expected segmentation domains |
|---|---|---|---|---|---|---|
| control | control (VC_909) | 576 | Takifugu rubripes | | - | - |
| shha arC | sonic hedgehog a activation region C | 462 | D. rerio Zv6 | chr7: 49.531.072-49.531.514 | notochord, floor plate, hypothalamus | brain, eye, notochord |
| bactin2 i1 | bactin2 intron1 | 508 | Cyprinus carpio | N/A | nonmuscle cells | ubiquitous |
| pax6b | pax6b eye enhancer | 343 | Takifugu rubripes | scaffold_309: 215.164-254.443 | eye, brain, spinal cord | eye |
| eng2b CXE | engrailed 2b CXE | 968 | D. rerio Zv6 | chr2: 27.210.540-27.210.955 | midbrain-hindbrain boundary | midbrain-hindbrain boundary |
| eng2b reg5 | engrailed 2b conserved region 5 | 416 | D. rerio Zv6 | chr2: 27.200.525-27.199.606 | midbrain-hindbrain boundary, brain | midbrain-hindbrain boundary, brain |
| dre-mir9-1 | micro-RNA 9 brain enhancer | 365 | D. rerio Zv6 | chr16: 26.936.634-26.936.998 | brain | brain |
| myl7 | myosin, light polypeptide 7, regulatory, cardiac enhancer | 285 | D. rerio Zv6 | cho8: 66.577.515-66.577.801 | heart | heart |
| isl1 | islet1 zCREST2 | 724 | D. rerio Zv6 | chr5: 53.167.655-53.168.379 | hindbrain and spinal cord motor and sensory neurons | spinal cord |
| dlx2b/6a ei | distal-less homeobox gene 2b/6a, ei | 479 | D. rerio Zv6 | chr19: 41.680.276-41.680.755 | forebrain | brain |
| mnx1 regB | motor neuron and pancreas homeobox 1, regB | 215 | D. rerio Zv6 | chr7: 48.712.492-48.712.707 | spinal motor neurons | spinal cord |

**Table 3: Number of embryos and domain specific Venus signal intensity data of enhancer-promoter combinations assayed in this study**

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| bactin2 i1 | apoeb | 84 | 66 | 63 | 0,002 | 1,493 | 0,038 | 0,866 | 0,789 | 0,121 | 0,129 | 0,208 |
| control | apoeb | 73 | 60 | 57 | 0,007 | 0,158 | 0,008 | 0,045 | 0,017 | 0,017 | 0,026 | 0,034 |
| dlx2b/6a ei | apoeb | 58 | 54 | 51 | 0,008 | 0,018 | 0,000 | 0,010 | 0,004 | 0,000 | 0,001 | 0,009 |
| dre-mir9-1 | apoeb | 82 | 63 | 60 | 0,125 | 1,648 | 0,392 | 0,862 | 0,421 | 0,731 | 0,548 | 0,545 |
| eng2b CXE | apoeb | 77 | 60 | 57 | 0,002 | 0,025 | 0,003 | 0,008 | 0,004 | 0,001 | 0,012 | 0,012 |
| eng2b reg5 | apoeb | 87 | 74 | 70 | 0,002 | 0,165 | 0,018 | 0,056 | 0,086 | 0,008 | 0,009 | 0,015 |
| isl1 | apoeb | 165 | 117 | 111 | 0,004 | 0,553 | 0,024 | 0,279 | 0,232 | 0,098 | 0,052 | 0,121 |
| mnx1 regB | apoeb | 88 | 82 | 78 | 0,006 | 0,093 | 0,009 | 0,033 | 0,027 | 0,002 | 0,012 | 0,031 |
| myl7 | apoeb | 70 | 64 | 61 | 0,052 | 0,959 | 0,371 | 0,660 | 0,401 | 0,709 | 0,221 | 0,302 |
| pax6b | apoeb | 48 | 30 | 28 | 0,000 | 0,010 | 0,002 | 0,003 | 0,016 | 0,008 | 0,005 | 0,000 |
| shha arC | apoeb | 86 | 75 | 71 | 0,022 | 1,345 | 0,031 | 0,367 | 0,367 | 0,076 | 0,593 | 0,150 |
| bactin2 i1 | atp6v1g1 | 123 | 83 | 79 | 0,517 | 0,002 | 0,295 | 0,029 | 0,003 | 0,300 | 0,094 | 0,123 |
| control | atp6v1g1 | 82 | 61 | 58 | 0,000 | 0,000 | 0,001 | 0,001 | 0,000 | 0,000 | 0,000 | 0,000 |
| dlx2b/6a ei | atp6v1g1 | 91 | 77 | 73 | 0,000 | 0,000 | 0,000 | 0,000 | 0,000 | 0,000 | 0,000 | 0,000 |
| dre-mir9-1 | atp6v1g1 | 83 | 55 | 52 | 0,002 | 0,002 | 0,004 | 0,001 | 0,000 | 0,002 | 0,002 | 0,000 |
| eng2b CXE | atp6v1g1 | 52 | 49 | 47 | 0,011 | 0,013 | 0,002 | 0,007 | 0,018 | 0,003 | 0,007 | 0,034 |
| eng2b reg5 | atp6v1g1 | 92 | 81 | 77 | 0,006 | 0,002 | 0,003 | 0,001 | 0,001 | 0,002 | 0,006 | 0,001 |
| isl1 | atp6v1g1 | 68 | 52 | 49 | 0,001 | 0,011 | 0,001 | 0,004 | 0,005 | 0,002 | 0,003 | 0,012 |
| mnx1 regB | atp6v1g1 | 80 | 55 | 52 | 0,004 | 0,014 | 0,011 | 0,016 | 0,000 | 0,002 | 0,014 | 0,014 |
| myl7 | atp6v1g1 | 77 | 43 | 41 | 0,000 | 0,001 | 0,000 | 0,000 | 0,001 | 0,002 | 0,000 | 0,000 |
| pax6b | atp6v1g1 | 85 | 78 | 74 | 0,000 | 0,000 | 0,000 | 0,000 | 0,000 | 0,000 | 0,000 | 0,000 |
| shha arC | atp6v1g1 | 75 | 45 | 43 | 0,001 | 0,001 | 0,001 | 0,001 | 0,000 | 0,001 | 0,000 | 0,000 |
| bactin2 i1 | c20orf45 | 91 | 76 | 72 | 0,007 | 0,379 | 0,013 | 0,075 | 0,065 | 0,027 | 0,030 | 0,026 |
| control | c20orf45 | 68 | 54 | 51 | 0,002 | 0,231 | 0,006 | 0,035 | 0,016 | 0,008 | 0,025 | 0,026 |
| dlx2b/6a ei | c20orf45 | 83 | 72 | 68 | 0,004 | 0,053 | 0,011 | 0,018 | 0,008 | 0,007 | 0,057 | 0,030 |
| dre-mir9-1 | c20orf45 | 87 | 63 | 60 | 0,010 | 0,069 | 0,060 | 0,057 | 0,018 | 0,100 | 0,085 | 0,076 |
| eng2b CXE | c20orf45 | 74 | 57 | 54 | 0,014 | 0,022 | 0,002 | 0,005 | 0,016 | 0,007 | 0,031 | 0,039 |
| eng2b reg5 | c20orf45 | 87 | 78 | 74 | 0,065 | 0,236 | 0,055 | 0,084 | 0,099 | 0,073 | 0,137 | 0,063 |
| isl1 | c20orf45 | 87 | 78 | 74 | 0,016 | 0,230 | 0,009 | 0,108 | 0,056 | 0,033 | 0,086 | 0,150 |

EP 2 278 548 A1

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| mnx1 regB | c20orf45 | 101 | 78 | 74 | 0,001 | 0,033 | 0,000 | 0,003 | 0,001 | 0,001 | 0,003 | 0,004 |
| myl7 | c20orf45 | 85 | 68 | 65 | 0,000 | 0,002 | 0,002 | 0,001 | 0,001 | 0,000 | 0,001 | 0,000 |
| pax6b | c20orf45 | 37 | 31 | 29 | 0,009 | 0,019 | 0,003 | 0,007 | 0,006 | 0,003 | 0,001 | 0,000 |
| shha arC | c20orf45 | 81 | 56 | 53 | 0,471 | 3,704 | 0,450 | 1,768 | 1,720 | 1,596 | 4,879 | 1,527 |
| bactin2 i1 | ccne | 71 | 49 | 47 | 0,000 | 0,000 | 0,001 | 0,001 | 0,001 | 0,000 | 0,000 | 0,000 |
| control | ccne | 90 | 66 | 63 | 0,000 | 0,000 | 0,001 | 0,000 | 0,001 | 0,001 | 0,001 | 0,001 |
| dlx2b/6a ei | ccne | 81 | 41 | 39 | 0,000 | 0,000 | 0,000 | 0,001 | 0,000 | 0,001 | 0,000 | 0,000 |
| dre-mir9-1 | ccne | 78 | 67 | 64 | 0,000 | 0,000 | 0,000 | 0,000 | 0,000 | 0,000 | 0,000 | 0,000 |
| eng2b CXE | ccne | 72 | 55 | 52 | 0,000 | 0,003 | 0,001 | 0,004 | 0,001 | 0,004 | 0,006 | 0,000 |
| eng2b reg5 | ccne | 86 | 69 | 66 | 0,000 | 0,000 | 0,000 | 0,001 | 0,000 | 0,001 | 0,000 | 0,000 |
| isl1 | ccne | 215 | 139 | 132 | 0,000 | 0,005 | 0,000 | 0,002 | 0,002 | 0,000 | 0,001 | 0,002 |
| mnx1 regB | ccne | 83 | 66 | 63 | 0,000 | 0,000 | 0,000 | 0,000 | 0,000 | 0,000 | 0,000 | 0,000 |
| pax6b | ccne | 47 | 30 | 28 | 0,000 | 0,001 | 0,000 | 0,004 | 0,002 | 0,003 | 0,000 | 0,000 |
| shha arC | ccne | 63 | 37 | 35 | 0,000 | 0,184 | 0,001 | 0,036 | 0,001 | 0,030 | 0,075 | 0,021 |
| bactin2 i1 | control | 66 | 48 | 46 | 0,000 | 0,001 | 0,001 | 0,003 | 0,000 | 0,000 | 0,000 | 0,000 |
| control | control | 76 | 67 | 64 | 0,000 | 0,000 | 0,000 | 0,000 | 0,000 | 0,000 | 0,000 | 0,000 |
| dlx2b/6a ei | control | 84 | 75 | 71 | 0,000 | 0,000 | 0,001 | 0,001 | 0,000 | 0,000 | 0,000 | 0,000 |
| dre-mir9-1 | control | 87 | 69 | 66 | 0,000 | 0,000 | 0,000 | 0,000 | 0,000 | 0,000 | 0,000 | 0,000 |
| eng2b CXE | control | 92 | 66 | 63 | 0,000 | 0,000 | 0,000 | 0,000 | 0,000 | 0,000 | 0,000 | 0,000 |
| eng2b reg5 | control | 86 | 64 | 61 | 0,001 | 0,001 | 0,000 | 0,001 | 0,000 | 0,000 | 0,000 | 0,000 |
| isi1 | control | 89 | 34 | 32 | 0,001 | 0,001 | 0,002 | 0,006 | 0,004 | 0,012 | 0,002 | 0,004 |
| mnx1 regB | control | 117 | 83 | 79 | 0,000 | 0,000 | 0,001 | 0,000 | 0,000 | 0,000 | 0,000 | 0,000 |
| myl7 | control | 77 | 67 | 64 | 0,000 | 0,000 | 0,001 | 0,001 | 0,000 | 0,000 | 0,001 | 0,000 |
| pax6b | control | 113 | 73 | 70 | 0,000 | 0,001 | 0,000 | 0,001 | 0,000 | 0,002 | 0,000 | 0,000 |
| shha arC | control | 161 | 78 | 74 | 0,005 | 0,000 | 0,002 | 0,000 | 0,000 | 0,001 | 0,010 | 0,001 |
| bactin2 i1 | dre-mir9-1 | 88 | 74 | 70 | 0,000 | 0,000 | 0,000 | 0,000 | 0,000 | 0,000 | 0,000 | 0,000 |
| control | dre-mir9-1 | 141 | 106 | 101 | 0,000 | 0,000 | 0,000 | 0,000 | 0,000 | 0,000 | 0,000 | 0,000 |
| dlx2b/6a ei | dre-mir9-1 | 88 | 66 | 63 | 0,000 | 0,000 | 0,000 | 0,000 | 0,000 | 0,000 | 0,000 | 0,000 |
| dre-mir9-1 | dre-mir9-1 | 75 | 53 | 50 | 0,001 | 0,000 | 0,000 | 0,000 | 0,000 | 0,000 | 0,000 | 0,000 |
| eng2b CXE | dre-mir9-1 | 73 | 56 | 53 | 0,002 | 0,002 | 0,001 | 0,002 | 0,003 | 0,005 | 0,001 | 0,001 |

EP 2 278 548 A1

(continued)

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| eng2b reg5 | dre-mir9-1 | 73 | 49 | 47 | 0,000 | 0,000 | 0,000 | 0,001 | 0,000 | 0,000 | 0,003 | 0,001 |
| isi1 | dre-mir9-1 | 53 | 47 | 45 | 0,000 | 0,000 | 0,000 | 0,000 | 0,000 | 0,001 | 0,000 | 0,001 |
| mnx1 regB | dre-mir9-1 | 87 | 70 | 66 | 0,000 | 0,000 | 0,000 | 0,000 | 0,000 | 0,000 | 0,002 | 0,001 |
| myl7 | dre-mir9-1 | 132 | 66 | 63 | 0,001 | 0,000 | 0,001 | 0,001 | 0,000 | 0,000 | 0,000 | 0,000 |
| pax6b | dre-mir9-1 | 87 | 70 | 66 | 0,000 | 0,000 | 0,000 | 0,000 | 0,000 | 0,000 | 0,000 | 0,000 |
| shha arC | dre-mir9-1 | 87 | 84 | 80 | 0,000 | 0,000 | 0,000 | 0,000 | 0,000 | 0,000 | 0,000 | 0,000 |
| bactin2 i1 | elp4 | 69 | 63 | 60 | 0,000 | 0,000 | 0,001 | 0,000 | 0,000 | 0,003 | 0,002 | 0,001 |
| control | elp4 | 80 | 67 | 64 | 0,000 | 0,001 | 0,000 | 0,002 | 0,002 | 0,000 | 0,001 | 0,001 |
| dlx2b/6a ei | elp4 | 90 | 65 | 62 | 0,000 | 0,000 | 0,000 | 0,000 | 0,000 | 0,000 | 0,000 | 0,000 |
| dre-mir9-1 | elp4 | 87 | 59 | 56 | 0,000 | 0,000 | 0,000 | 0,000 | 0,000 | 0,000 | 0,000 | 0,000 |
| eng2b CXE | elp4 | 47 | 37 | 35 | 0,000 | 0,000 | 0,002 | 0,006 | 0,004 | 0,003 | 0,003 | 0,005 |
| isl1 | elp4 | 85 | 74 | 70 | 0,001 | 0,000 | 0,000 | 0,000 | 0,002 | 0,000 | 0,002 | 0,002 |
| mnx1 regB | elp4 | 88 | 71 | 67 | 0,000 | 0,000 | 0,000 | 0,000 | 0,000 | 0,001 | 0,000 | 0,000 |
| myl7 | elp4 | 51 | 40 | 38 | 0,000 | 0,000 | 0,000 | 0,000 | 0,000 | 0,000 | 0,001 | 0,000 |
| pax6b | elp4 | 127 | 98 | 93 | 0,001 | 0,014 | 0,002 | 0,003 | 0,002 | 0,005 | 0,004 | 0,002 |
| shha arC | elp4 | 110 | 86 | 82 | 0,003 | 0,162 | 0,002 | 0,020 | 0,014 | 0,017 | 0,062 | 0,010 |
| bactin2 i1 | eng2b | 150 | 111 | 105 | 0,000 | 0,000 | 0,000 | 0,000 | 0,000 | 0,000 | 0,000 | 0,000 |
| control | eng2b | 79 | 65 | 62 | 0,000 | 0,000 | 0,000 | 0,000 | 0,001 | 0,001 | 0,000 | 0,000 |
| dlx2b/6a ei | eng2b | 92 | 52 | 49 | 0,001 | 0,001 | 0,014 | 0,005 | 0,008 | 0,000 | 0,003 | 0,013 |
| dre-mir9-1 | eng2b | 80 | 68 | 65 | 0,003 | 0,002 | 0,006 | 0,006 | 0,000 | 0,003 | 0,002 | 0,003 |
| eng2b CXE | eng2b | 84 | 65 | 62 | 0,001 | 0,000 | 0,000 | 0,001 | 0,000 | 0,001 | 0,001 | 0,001 |
| eng2b reg5 | eng2b | 67 | 51 | 48 | 0,000 | 0,001 | 0,004 | 0,005 | 0,003 | 0,000 | 0,001 | 0,002 |
| isl1 | eng2b | 77 | 62 | 59 | 0,012 | 0,011 | 0,024 | 0,051 | 0,035 | 0,005 | 0,016 | 0,362 |
| mnx1 regB | eng2b | 90 | 76 | 72 | 0,001 | 0,008 | 0,004 | 0,001 | 0,001 | 0,001 | 0,001 | 0,002 |
| myl7 | eng2b | 95 | 56 | 53 | 0,000 | 0,001 | 0,000 | 0,001 | 0,000 | 0,000 | 0,001 | 0,000 |
| pax6b | eng2b | 80 | 59 | 56 | 0,000 | 0,000 | 0,001 | 0,000 | 0,000 | 0,004 | 0,000 | 0,000 |
| shha arC | eng2b | 85 | 71 | 67 | 0,002 | 0,034 | 0,001 | 0,002 | 0,003 | 0,001 | 0,042 | 0,002 |
| bactin2 i1 | gtf2a1 | 87 | 59 | 56 | 0,002 | 0,325 | 0,016 | 0,128 | 0,109 | 0,020 | 0,035 | 0,034 |
| control | gtf2a1 | 79 | 70 | 66 | 0,002 | 0,027 | 0,003 | 0,009 | 0,006 | 0,001 | 0,011 | 0,013 |
| dlx2b/6a ei | gtf2a1 | 85 | 57 | 54 | 0,000 | 0,020 | 0,001 | 0,004 | 0,001 | 0,001 | 0,003 | 0,002 |

33

EP 2 278 548 A1

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| dre-mir9-1 | gtf2a1 | 69 | 42 | 40 | 0,171 | 4,795 | 0,920 | 3,362 | 3,497 | 1,599 | 1,367 | 1,817 |
| eng2b CXE | gtf2a1 | 78 | 55 | 52 | 0,017 | 0,033 | 0,048 | 0,086 | 0,132 | 0,032 | 0,133 | 0,060 |
| eng2b reg5 | gtf2a1 | 56 | 44 | 42 | 0,000 | 0,000 | 0,000 | 0,000 | 0,000 | 0,000 | 0,000 | 0,000 |
| ist1 | gtf2a1 | 49 | 41 | 39 | 0,000 | 0,001 | 0,003 | 0,004 | 0,004 | 0,001 | 0,001 | 0,026 |
| mnx1 regB | gtf2a1 | 124 | 97 | 92 | 0,005 | 0,272 | 0,046 | 0,099 | 0,081 | 0,011 | 0,042 | 0,032 |
| myl7 | gtf2a1 | 54 | 47 | 45 | 0,001 | 0,012 | 0,002 | 0,002 | 0,000 | 0,000 | 0,000 | 0,002 |
| pax6b | gtf2a1 | 78 | 36 | 34 | 0,000 | 0,009 | 0,002 | 0,006 | 0,014 | 0,014 | 0,001 | 0,000 |
| shha arC | gtf2a1 | 250 | 155 | 146 | 0,003 | 0,167 | 0,003 | 0,026 | 0,039 | 0,048 | 0,061 | 0,009 |
| bactin2 i1 | hsp70 | 90 | 77 | 73 | 0,000 | 0,000 | 0,000 | 0,000 | 0,000 | 0,000 | 0,000 | 0,000 |
| control | hsp70 | 153 | 133 | 126 | 0,001 | 0,000 | 0,000 | 0,001 | 0,002 | 0,000 | 0,002 | 0,001 |
| dlx2b/6a ei | hsp70 | 69 | 33 | 31 | 0,000 | 0,001 | 0,000 | 0,000 | 0,000 | 0,000 | 0,001 | 0,000 |
| dre-mir9-1 | hsp70 | 60 | 42 | 40 | 0,002 | 0,009 | 0,002 | 0,002 | 0,000 | 0,012 | 0,008 | 0,000 |
| eng2b CXE | hsp70 | 74 | 54 | 51 | 0,005 | 0,002 | 0,001 | 0,003 | 0,010 | 0,001 | 0,000 | 0,003 |
| eng2b reg5 | hsp70 | 73 | 60 | 57 | 0,000 | 0,000 | 0,000 | 0,000 | 0,000 | 0,000 | 0,000 | 0,000 |
| isl1 | hsp70 | 232 | 166 | 158 | 0,000 | 0,003 | 0,001 | 0,004 | 0,004 | 0,001 | 0,001 | 0,017 |
| mnx1 regB | hsp70 | 81 | 60 | 57 | 0,005 | 0,004 | 0,007 | 0,037 | 0,005 | 0,003 | 0,042 | 0,032 |
| myl7 | hsp70 | 64 | 31 | 29 | 0,001 | 0,007 | 0,001 | 0,002 | 0,001 | 0,006 | 0,000 | 0,000 |
| pax6b | hsp70 | 87 | 74 | 70 | 0,000 | 0,012 | 0,007 | 0,007 | 0,002 | 0,005 | 0,006 | 0,010 |
| shha arC | hsp70 | 38 | 30 | 28 | 0,006 | 1,178 | 0,005 | 0,166 | 0,144 | 0,417 | 0,348 | 0,102 |
| bactin2 i1 | klf4 | 80 | 43 | 41 | 0,003 | 0,032 | 0,066 | 0,043 | 0,099 | 0,001 | 0,003 | 0,014 |
| control | klf4 | 131 | 112 | 107 | 0,002 | 0,019 | 0,015 | 0,014 | 0,003 | 0,021 | 0,005 | 0,015 |
| dlx2b/6a ei | klf4 | 70 | 55 | 52 | 0,002 | 0,001 | 0,002 | 0,001 | 0,000 | 0,000 | 0,000 | 0,001 |
| dre-mir9-1 | klf4 | 90 | 69 | 66 | 0,022 | 0,529 | 0,318 | 0,362 | 0,135 | 0,149 | 0,128 | 0,206 |
| eng2b CXE | klf4 | 61 | 50 | 47 | 1,910 | 1,362 | 1,076 | 1,464 | 2,821 | 2,767 | 0,739 | 0,688 |
| eng2b reg5 | klf4 | 74 | 60 | 57 | 0,000 | 0,000 | 0,000 | 0,000 | 0,000 | 0,000 | 0,000 | 0,000 |
| isl1 | klf4 | 123 | 86 | 81 | 0,006 | 0,011 | 0,014 | 0,034 | 0,033 | 0,004 | 0,008 | 0,108 |
| mnx1 regB | klf4 | 89 | 70 | 66 | 0,302 | 1,118 | 0,599 | 0,880 | 0,640 | 0,572 | 0,549 | 0,676 |
| myl7 | klf4 | 54 | 45 | 43 | 0,110 | 0,372 | 0,241 | 0,253 | 0,163 | 0,399 | 0,190 | 0,234 |
| pax6b | klf4 | 82 | 32 | 30 | 0,000 | 0,002 | 0,005 | 0,004 | 0,008 | 0,007 | 0,002 | 0,006 |
| shha arC | klf4 | 82 | 59 | 56 | 0,047 | 0,301 | 0,179 | 0,196 | 0,096 | 0,148 | 0,507 | 0,145 |

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| bactin2 i1 | krt4 | 175 | 138 | 131 | 0,003 | 0,427 | 0,019 | 0,357 | 0,381 | 0,034 | 0,049 | 0,076 |
| control | krt4 | 84 | 67 | 64 | 0,002 | 0,062 | 0,009 | 0,023 | 0,020 | 0,005 | 0,008 | 0,012 |
| dlx2b/6a ei | krt4 | 82 | 66 | 63 | 0,003 | 0,019 | 0,001 | 0,005 | 0,004 | 0,001 | 0,004 | 0,005 |
| dre-mir9-1 | krt4 | 72 | 61 | 58 | 0,765 | 3,154 | 1,283 | 2,969 | 2,079 | 2,149 | 1,823 | 1,873 |
| eng2b CXE | krt4 | 84 | 42 | 40 | 0,018 | 0,296 | 0,011 | 0,236 | 0,904 | 0,124 | 0,050 | 0,022 |
| eng2b reg5 | krt4 | 90 | 48 | 46 | 0,001 | 0,000 | 0,001 | 0,001 | 0,002 | 0,000 | 0,002 | 0,000 |
| isl1 | krt4 | 46 | 37 | 35 | 0,000 | 0,013 | 0,006 | 0,015 | 0,035 | 0,009 | 0,002 | 0,173 |
| mnx1 regB | krt4 | 130 | 95 | 90 | 0,013 | 0,033 | 0,020 | 0,014 | 0,017 | 0,003 | 0,021 | 0,019 |
| myl7 | krt4 | 91 | 79 | 75 | 0,230 | 0,402 | 0,377 | 0,406 | 0,212 | 0,509 | 0,340 | 0,342 |
| pax6b | krt4 | 54 | 33 | 31 | 0,025 | 0,118 | 0,032 | 0,064 | 0,039 | 0,032 | 0,040 | 0,030 |
| shha arC | krt4 | 90 | 71 | 67 | 0,044 | 5,247 | 0,077 | 1,196 | 1,522 | 0,409 | 2,623 | 0,634 |
| bactin2 i1 | mef2d | 87 | 80 | 76 | 0,000 | 0,000 | 0,000 | 0,000 | 0,000 | 0,001 | 0,000 | 0,000 |
| control | mef2d | 84 | 64 | 61 | 0,000 | 0,000 | 0,000 | 0,001 | 0,005 | 0,000 | 0,000 | 0,001 |
| dlx2b/6a ei | mef2d | 90 | 65 | 62 | 0,000 | 0,000 | 0,000 | 0,000 | 0,000 | 0,000 | 0,000 | 0,000 |
| dre-mir9-1 | mef2d | 81 | 52 | 49 | 0,000 | 0,000 | 0,003 | 0,002 | 0,000 | 0,003 | 0,001 | 0,001 |
| eng2b CXE | mef2d | 67 | 44 | 42 | 0,000 | 0,000 | 0,000 | 0,001 | 0,004 | 0,007 | 0,003 | 0,000 |
| eng2b reg5 | mef2d | 76 | 58 | 55 | 0,000 | 0,000 | 0,000 | 0,000 | 0,000 | 0,000 | 0,000 | 0,000 |
| isl1 | mef2d | 49 | 34 | 32 | 0,000 | 0,001 | 0,001 | 0,000 | 0,000 | 0,000 | 0,000 | 0,000 |
| mnx1 regB | mef2d | 56 | 48 | 46 | 0,000 | 0,000 | 0,000 | 0,000 | 0,000 | 0,001 | 0,000 | 0,000 |
| myl7 | mef2d | 56 | 35 | 33 | 0,000 | 0,000 | 0,000 | 0,000 | 0,000 | 0,000 | 0,000 | 0,000 |
| pax6b | mef2d | 66 | 35 | 33 | 0,001 | 0,000 | 0,000 | 0,002 | 0,001 | 0,000 | 0,001 | 0,001 |
| shha arC | mef2d | 60 | 33 | 31 | 0,008 | 0,182 | 0,002 | 0,040 | 0,013 | 0,115 | 0,170 | 0,061 |
| bactin2 i1 | ndr1 | 40 | 30 | 28 | 0,001 | 0,026 | 0,003 | 0,002 | 0,001 | 0,002 | 0,004 | 0,011 |
| control | ndr1 | 136 | 114 | 108 | 0,000 | 0,000 | 0,000 | 0,000 | 0,000 | 0,000 | 0,000 | 0,000 |
| dlx2b/6a ei | ndr1 | 90 | 73 | 69 | 0,000 | 0,000 | 0,000 | 0,000 | 0,000 | 0,000 | 0,000 | 0,000 |
| dre-mir9-1 | ndr1 | 87 | 53 | 50 | 0,000 | 0,000 | 0,000 | 0,001 | 0,000 | 0,001 | 0,000 | 0,001 |
| eng2b CXE | ndr1 | 73 | 50 | 47 | 0,000 | 0,000 | 0,002 | 0,003 | 0,001 | 0,001 | 0,000 | 0,002 |
| eng2b reg5 | ndr1 | 87 | 76 | 72 | 0,000 | 0,001 | 0,002 | 0,001 | 0,000 | 0,000 | 0,000 | 0,000 |
| isl1 | ndr1 | 89 | 78 | 74 | 0,000 | 0,000 | 0,000 | 0,000 | 0,000 | 0,000 | 0,000 | 0,000 |
| mnx1 regB | ndr1 | 89 | 75 | 71 | 0,000 | 0,000 | 0,000 | 0,000 | 0,000 | 0,000 | 0,000 | 0,000 |

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| myl7 | ndr1 | 62 | 53 | 50 | 0,000 | 0,001 | 0,001 | 0,015 | 0,000 | 0,007 | 0,010 | 0,003 |
| pax6b | ndr1 | 62 | 50 | 47 | 0,002 | 0,010 | 0,000 | 0,018 | 0,000 | 0,008 | 0,000 | 0,001 |
| shha arC | ndr1 | 80 | 66 | 63 | 0,000 | 0,077 | 0,000 | 0,006 | 0,013 | 0,002 | 0,023 | 0,009 |
| bactin2 i1 | pcbp2 | 92 | 85 | 81 | 0,000 | 0,000 | 0,000 | 0,000 | 0,000 | 0,000 | 0,000 | 0,000 |
| control | pcbp2 | 79 | 48 | 46 | 0,000 | 0,000 | 0,000 | 0,000 | 0,000 | 0,000 | 0,000 | 0,000 |
| dlx2b/6a ei | pcbp2 | 56 | 45 | 43 | 0,000 | 0,000 | 0,000 | 0,000 | 0,000 | 0,001 | 0,000 | 0,000 |
| dre-mir9-1 | pcbp2 | 90 | 81 | 77 | 0,000 | 0,000 | 0,000 | 0,000 | 0,000 | 0,000 | 0,000 | 0,000 |
| eng2b CXE | pcbp2 | 82 | 67 | 64 | 0,000 | 0,000 | 0,000 | 0,000 | 0,000 | 0,000 | 0,000 | 0,000 |
| eng2b reg5 | pcbp2 | 89 | 78 | 74 | 0,000 | 0,000 | 0,000 | 0,000 | 0,000 | 0,000 | 0,000 | 0,000 |
| isl1 | pcbp2 | 170 | 124 | 118 | 0,000 | 0,000 | 0,000 | 0,000 | 0,000 | 0,000 | 0,000 | 0,000 |
| mnx1 regB | pcbp2 | 74 | 62 | 59 | 0,000 | 0,001 | 0,000 | 0,000 | 0,000 | 0,003 | 0,000 | 0,000 |
| myl7 | pcbp2 | 84 | 44 | 42 | 0,000 | 0,000 | 0,000 | 0,000 | 0,000 | 0,000 | 0,001 | 0,002 |
| pax6b | pcbp2 | 87 | 71 | 67 | 0,000 | 0,000 | 0,000 | 0,000 | 0,000 | 0,000 | 0,000 | 0,000 |
| shha arC | pcbp2 | 90 | 62 | 59 | 0,004 | 0,050 | 0,000 | 0,007 | 0,004 | 0,022 | 0,014 | 0,003 |
| bactin2 i1 | rdh10 | 73 | 48 | 46 | 0,000 | 0,005 | 0,003 | 0,002 | 0,000 | 0,000 | 0,001 | 0,003 |
| control | rdh10 | 77 | 62 | 59 | 0,000 | 0,000 | 0,000 | 0,000 | 0,000 | 0,000 | 0,000 | 0,001 |
| dlx2b/6a ei | rdh10 | 85 | 51 | 48 | 0,000 | 0,000 | 0,000 | 0,000 | 0,000 | 0,000 | 0,000 | 0,000 |
| dre-mir9-1 | rdh10 | 113 | 83 | 78 | 0,005 | 0,008 | 0,006 | 0,003 | 0,000 | 0,004 | 0,003 | 0,008 |
| eng2b CXE | rdh10 | 85 | 71 | 67 | 0,034 | 0,158 | 0,031 | 0,142 | 0,318 | 0,029 | 0,072 | 0,047 |
| eng2b reg5 | rdh10 | 91 | 83 | 79 | 0,001 | 0,000 | 0,000 | 0,000 | 0,000 | 0,000 | 0,000 | 0,000 |
| isl1 | rdh10 | 59 | 35 | 33 | 0,000 | 0,000 | 0,000 | 0,000 | 0,001 | 0,013 | 0,000 | 0,000 |
| mnx1 regB | rdh10 | 91 | 85 | 81 | 0,000 | 0,000 | 0,000 | 0,000 | 0,000 | 0,000 | 0,000 | 0,000 |
| myl7 | rdh10 | 84 | 66 | 63 | 0,004 | 0,000 | 0,001 | 0,001 | 0,001 | 0,003 | 0,003 | 0,000 |
| pax6b | rdh10 | 55 | 36 | 34 | 0,000 | 0,002 | 0,000 | 0,002 | 0,000 | 0,001 | 0,000 | 0,000 |
| shha arC | rdh10 | 62 | 56 | 53 | 0,005 | 0,082 | 0,000 | 0,015 | 0,008 | 0,012 | 0,036 | 0,008 |
| bactin2 i1 | shha | 59 | 45 | 43 | 0,003 | 0,022 | 0,023 | 0,044 | 0,003 | 0,004 | 0,012 | 0,006 |
| control | shha | 80 | 67 | 64 | 0,000 | 0,001 | 0,000 | 0,000 | 0,000 | 0,000 | 0,000 | 0,000 |
| dlx2b/6a ei | shha | 86 | 48 | 46 | 0,000 | 0,000 | 0,000 | 0,000 | 0,000 | 0,000 | 0,000 | 0,000 |
| dre-mir9-1 | shha | 79 | 64 | 61 | 0,004 | 0,032 | 0,019 | 0,016 | 0,001 | 0,010 | 0,012 | 0,024 |
| eng2b CXE | shha | 137 | 73 | 69 | 0,000 | 0,000 | 0,000 | 0,000 | 0,001 | 0,002 | 0,001 | 0,000 |

EP 2 278 548 A1

(continued)

| Enhancer | Promoter | total number of embryos | embryos passing quality control | embryos after outlier removal | domain size normalized mean of Venus signal intensities | | | | | | | |
|---|---|---|---|---|---|---|---|---|---|---|---|---|
| | | | | | Yolk | Retina | Skin | Brain | MHB | Heart | Notochord | Spinal Cord |
| eng2b reg5 | shha | 91 | 63 | 60 | 0,000 | 0,000 | 0,004 | 0,006 | 0,024 | 0,001 | 0,001 | 0,006 |
| isl1 | shha | 245 | 164 | 155 | 0,000 | 0,001 | 0,000 | 0,007 | 0,000 | 0,004 | 0,002 | 0,006 |
| mnx1 regB | shha | 152 | 103 | 98 | 0,000 | 0,001 | 0,001 | 0,000 | 0,001 | 0,000 | 0,002 | 0,000 |
| myl7 | shha | 79 | 64 | 61 | 0,000 | 0,000 | 0,001 | 0,000 | 0,000 | 0,002 | 0,000 | 0,000 |
| pax6b | shha | 88 | 68 | 65 | 0,000 | 0,000 | 0,000 | 0,000 | 0,000 | 0,000 | 0,000 | 0,002 |
| shha arC | shha | 80 | 61 | 58 | 0,003 | 0,415 | 0,007 | 0,086 | 0,020 | 0,136 | 0,234 | 0,038 |
| bactin2 i1 | tbp | 96 | 80 | 76 | 0,000 | 0,000 | 0,002 | 0,011 | 0,000 | 0,000 | 0,000 | 0,000 |
| control | tbp | 77 | 38 | 36 | 0,000 | 0,001 | 0,002 | 0,000 | 0,000 | 0,000 | 0,002 | 0,001 |
| dlx2b/6a ei | tbp | 83 | 55 | 52 | 0,003 | 0,562 | 0,011 | 0,135 | 0,114 | 0,033 | 0,065 | 0,034 |
| dre-mir9-1 | tbp | 77 | 44 | 42 | 0,026 | 0,073 | 0,060 | 0,033 | 0,035 | 0,065 | 0,082 | 0,052 |
| eng2b CXE | tbp | 84 | 55 | 52 | 0,000 | 0,063 | 0,003 | 0,015 | 0,013 | 0,006 | 0,016 | 0,014 |
| eng2b reg5 | tbp | 87 | 62 | 59 | 0,004 | 0,068 | 0,017 | 0,007 | 0,002 | 0,009 | 0,019 | 0,009 |
| isl1 | tbp | 90 | 63 | 60 | 0,000 | 0,006 | 0,001 | 0,001 | 0,001 | 0,000 | 0,004 | 0,003 |
| myl7 | tbp | 111 | 92 | 87 | 0,000 | 0,000 | 0,000 | 0,000 | 0,000 | 0,000 | 0,000 | 0,000 |
| pax6b | tbp | 85 | 74 | 70 | 0,000 | 0,000 | 0,000 | 0,000 | 0,000 | 0,000 | 0,000 | 0,000 |
| shha arC | tbp | 174 | 140 | 133 | 0,005 | 0,019 | 0,002 | 0,005 | 0,002 | 0,004 | 0,012 | 0,002 |
| bactin2 i1 | tram1 | 172 | 113 | 107 | 0,000 | 0,000 | 0,001 | 0,004 | 0,001 | 0,000 | 0,001 | 0,000 |
| control | tram1 | 119 | 93 | 89 | 0,000 | 0,000 | 0,000 | 0,000 | 0,000 | 0,000 | 0,000 | 0,000 |
| dre-mir9-1 | tram1 | 89 | 80 | 76 | 0,000 | 0,000 | 0,000 | 0,000 | 0,000 | 0,000 | 0,000 | 0,000 |
| eng2b CXE | tram1 | 52 | 40 | 38 | 0,001 | 0,007 | 0,001 | 0,003 | 0,006 | 0,000 | 0,002 | 0,007 |
| eng2b reg5 | tram 1 | 80 | 54 | 51 | 0,000 | 0,000 | 0,000 | 0,000 | 0,000 | 0,000 | 0,000 | 0,000 |
| pax6b | tram1 | 109 | 83 | 79 | 0,000 | 0,000 | 0,000 | 0,000 | 0,000 | 0,000 | 0,000 | 0,000 |
| shha arC | tram 1 | 95 | 62 | 59 | 0,002 | 0,008 | 0,001 | 0,002 | 0,004 | 0,009 | 0,009 | 0,002 |
| | total | 17793 | 13253 | 12582 | | | | | | | | |

EP 2 278 548 A1

**Table 4: Primers used in this study**

| Element name | Forward primer | | Reverse Primer |
|---|---|---|---|
| | | | |
| **promoters** | | | |
| control | AAGCTTCGTGTATTGTACGG | | TATGTGTGTTATTTTTGTATAG |
| apoeb | TGGGATGACAAAAGACGA | | CCCTTCTGTAATAAGAGGATGA |
| atp6v1g1 | CTGTGAGTCTCGTGCAGTC | | GCTTTGGTACGGATTTTATTT |
| gtf2a1 | CAGCTGACTGCACGGTAAGA | | CTCTTTACGGTCTTATTCACAGTCC |
| klf4 | ACTACATCCCAAGCGTCAT | | AGGTGTTTACTCTCATTCAGT |
| krt4 | CAAGTGTGTGTGTGTGTGAGAG | | CTGAGAAGGAGGTACGAGAGTG |
| ndr1 | CTGACCATCAAAAGACTGCAAG | | TCAAATCAAGGTAATAACCACACG |
| pcpb2 | CAGTGTGCAGTGTGGAGTACG | | GGGGAAGAGGGAAGACACG |
| rdh10 | CATAACAGGCGGACACAC | | CCACGAAATCTGCCCAAA |
| tbp | AGTATGCGAGCCAATAGTGC | | CTCCGTCTAGAAACAGTGTTAGATCA |
| tram1 | GCTCTCTCGTCTCCTTGC | | GTTCTGGATCACAAACTCATGG |
| c20orf45 | GGGAGATTTTCCATTTAGATTGC | | TTTAGAGTTTAACGGGCGACT |
| ccne | GTGCTTCGTTGTCATTCTAGGAG | | AGTCTGTAAGCAGGCAGCAT |
| shha | GTTTTGTGGGATAACATCAGAAGTG | | CGGAGGTTTGCGGCGGGGA |
| mef2d | CTTCCACACAGCAGTATCCATTCTA | | GGTTATTATTTAGCCCGTACAGTCA |
| dre-mir9-1 | TTGATCTAAATACAGTTGACTTTCTAA | | GGATTCTTGTTACTTTCGGTTA |
| elp4 | TCTCTTTCTGATTGGCTGAGATTAC | | GCTGCGGGTTTTCTTCTGA |
| hsp70 | TTGATTGGTCGAACATGCTG | | CAGTCCGCTCGCTGTCTC |
| eng2b | TGAGAATAAGGCGAGGTTGG | | TTCAGAATCAAAGCAGTAGACCTG |
| | | | |
| **enhancers** | | | |
| control | GTGTGTCATCCTCATCCACG | | CATTCCATGATGGTGCTCTG |
| shha arc | AGCTTGACAACGGAGAGCAT | | GAAACGCGCACATAAGGAAT |

| Element name | Forward primer | | Reverse Primer |
|---|---|---|---|
| b-actin-i1 | GCAGCCCTTCAAGTCTTTCATTT | | GACAAAGGAAGTCCCTCTGCATT |
| pax6-eye | GCTGGCAAACACACTAACTTCACTT | | TCATGTTTCTGTGTTTTGTTGCAGT |
| eng2b CXE | TATCTTGTCCCCATTCCAACAGAG | | ATGTCAGCCAGAATGGTCAAAAAC |
| eng2b reg5 | CGATACACTTTGATGATACGCATTG | | GCTCACATGACATTTCTCATTTTCC |
| dre-mir9-1 brain enh | ATTCCTTTCCTTGGCATCAA | | GGGACACCGTTGTTCCTCTA |
| myl7 | CCATCCTTTTCATCCCTCAA | | AGCTTTGTCTACTCACCATGTTC |
| isl1 zCREST2 | TCCAGCACCATAATTCACCA | | CCAGTATCGTGCAGCCCTA |
| dlx2b/6a ei | AATCAGAAAGCAAGGCAAAATTAG | | TGTCATATAAACACACTGGCTGAA |
| mnx1regB | ATGTGGAGGATCGGTGTCAT | | CCGGTGACTTGTTGATTTCC |
| | | | |
| gateway primers | | | |
| attB1 | GGGGACAAGTTTGTACAAAAAAGCAGGCT | attB2 | GGGGACCACTTTGTACAAGAAAGCTGGGT |
| attB3 | GGGGACAAGTTTGTATAATAAAGTAGGCT | attB5 | GGGGACCACTTTGTATACAAAAGTTGGGT |
| | | Venus Rev | TAGCTCAGGTAGTGGTTGTC |
| M13 FP | TGTAAAACGACGGCCAGT | M13 RP | CAGGAAACAGCTATGACC |

EP 2 278 548 A1

**Table 5: Reproducibility of spatial registration of Venus signal intensity in repeats of the experiment with theshha arC:krt4 construct**

| Repeat no. | Enhancer | Promoter | total number of embryos | embryos passing quality control | embryos after outlier removal | Yolk | Retina | Skin | Brain | MHB | Heart | Notochord | Spinal Cord | expected domains |
|---|---|---|---|---|---|---|---|---|---|---|---|---|---|---|
| 1 | shha arC | krt4 | 90 | 71 | 67 | 0,044 | **5,247** | 0,077 | **1,196** | 1,522 | 0,409 | **2,623** | 0,634 | **9,07** |
| 2 | shha arC | krt4 | 84 | 70 | 67 | 0,011 | **1,559** | 0,017 | **0,443** | 0,639 | 0,050 | **0,843** | 0,185 | **2,85** |
| 3 | shha arC | krt4 | 89 | 78 | 74 | 0,012 | **2,887** | 0,019 | **0,628** | 0,475 | 0,239 | **0,990** | 0,238 | **4,51** |
| 4 | shha arC | krt4 | 90 | 68 | 65 | 0,063 | **2,613** | 0,091 | **1,153** | 0,682 | 1,195 | **3,589** | 0,934 | **7,36** |
| | | | | | | | | | | | | | | |
| 1 | shha arC | krt4 | 90 | 71 | 67 | 0,37% | **44,65%** | 0,66% | **10,18%** | 12,95 % | 3,48% | **22,32%** | 5,39% | **77,14%** |
| 2 | shha arC | krt4 | 84 | 70 | 67 | 0,29% | **41,61%** | 0,45% | **11,82%** | 17,05 % | 1,33% | **22,50%** | 4,94% | **75,93%** |
| 3 | shha arC | krt4 | 89 | 78 | 74 | 0,22% | **52,61%** | 0,35% | **11,44%** | 8,66% | 4,35% | **18,04%** | 4,34% | **82,09%** |
| 4 | shha arC | krt4 | 90 | 68 | 65 | 0,61% | **25,32%** | 0,88% | **11,17%** | 6,61% | 11,58% | **34,78%** | 9,05% | **71,27%** |

**Table 6: Validation of domain registration**

| Validation experiment using 29 randomly chosen embryos | | | | | | | | | |
|---|---|---|---|---|---|---|---|---|---|
| **%** | **Yo** | **Ey** | **Sk** | **Br** | **Mh** | **He** | **No** | **SP** | **Sum** |
| **Yo** | **97** | 0 | 2 | 0 | 0 | 0 | 0 | 0 | 99 |
| **Ey** | 0 | **77** | 0 | 21 | 1 | 0 | 0 | 0 | 99 |
| **Sk** | 2 | 0 | **83** | 2 | 0 | 1 | 0 | 4 | 92 |
| **Br** | 2 | 6 | 5 | **76** | 4 | 3 | 1 | 1 | 98 |
| **Mh** | 0 | 1 | 4 | 19 | **74** | 0 | 0 | 0 | 98 |
| **He** | 8 | 0 | 8 | 4 | 0 | **72** | 0 | 0 | 92 |
| **No** | 6 | 0 | 0 | 4 | 0 | 0 | **84** | 4 | 98 |
| **Sp** | 0 | 0 | 5 | 2 | 0 | 0 | 6 | **86** | 99 |
| **Sum** | 115 | 84 | 107 | 128 | 79 | 76 | 91 | 95 | |
| | | | | | | | | **Average accuracy: 81,4%** | |
| Validation experiment using 30 stage synchronous embryos from random experiments | | | | | | | | | |
| **%** | **Yo** | **Ey** | **Sk** | **Br** | **Mh** | **He** | **No** | **SP** | **Sum** |
| **Yo** | **98** | 0 | 1 | 0 | 0 | 0 | 0 | 0 | 99 |
| **Ey** | 0 | **77** | 0 | 21 | 2 | 0 | 0 | 0 | 100 |
| **Sk** | 3 | 0 | **86** | 2 | 0 | 1 | 0 | 4 | 96 |
| **Br** | 2 | 5 | 3 | **81** | 5 | 1 | 1 | 1 | 99 |
| **Mh** | 0 | 0 | 4 | 5 | **91** | 0 | 0 | 0 | 100 |
| **He** | 13 | 0 | 2 | 9 | 0 | **76** | 0 | 0 | 100 |
| **No** | 3 | 0 | 0 | 2 | 0 | 0 | **87** | 8 | 100 |
| **Sp** | 0 | 0 | 4 | 1 | 0 | 0 | 1 | **93** | 99 |
| **Sum** | 119 | 82 | 100 | 121 | 98 | 78 | 89 | 106 | |
| | | | | | | | | **Average accuracy: 86%** | |

**Claims**

1.  Computerimplemented method for automatically analysing a set of E digital embryo images $e_i$ with the following steps:

    - obtaining the set of E digital embryo images $e_i$, where E is a natural number,
    - for each digital embryo image $e_i$ of the set of E digital embryo images:

        - - identifying L landmarks $l_{ij}$ (26) in the digital embryo image $e_i$, wherein L is a natural number,
        - - warping the digital embryo image $e_i$ by translating the position of each landmark $l_{ij}$ (26) in the digital embryo image $e_i$ into a position of a corresponding reference landmark $rl_j$ (28) of a reference embryo image re, and
        - - evaluating the pixel values of the warped digital embryo image $e_i$.

2.  Method according to claim 1, wherein identifying the L landmarks $l_{ij}$ (26) in a digital embryo image $e_i$ comprises for that digital embryo image $e_i$:

    - identifying a head and a tail of the embryo,
    - reducing the digital embryo image $e_i$ to a rectangle containing the head and the tail of the embryo, and
    - adjusting the position of the embryo by rotating and/or reflecting the digital embryo image $e_i$, so that for all

digital embryo images $e_i$ of the set of E digital embryo images the embryos are oriented substantially identically.

3. Method according to claim 1 or 2, wherein identifying the L landmarks $l_{ij}$ (26) in a digital embryo image $e_i$ comprises for that digital embryo image $e_i$:

identifying an initial outline of the embryo in the digital embryo image $e_i$ by applying image processing methods on the digital embryo image $e_i$, and
- applying an outline model to the initial outline and fitting the outline model to the initial outline to obtain a final outline of the embryo.

4. Method according to claim 3, wherein the outline model comprises a ventral side model and a dorsal side model, wherein

- the ventral side model contains a definition of a circle $c_0$ representing the head of the embryo, a definition of a circle $c_1$ representing the yolk of the embryo and a definition of a circle $c_2$ and a straight line representing the tail of the embryo, wherein

- - the definition of a the circle $c_0$ includes a radius $r_0$ around a center $(x_0, y_0)$,
- - the definition of a the circle $c_1$ includes a radius $r_1$ around a center $(x_1, y_1)$,
- - the definition of a the circle $c_2$ includes a radius $r_2$ around a center $(x_2, y_2)$, and wherein the model includes the further boundary conditions:
- - the circle $c_0$ and the circle $c_1$ intersect each other,
- - the circle $c_1$ and the circle $c_2$ are connected with identical slope at an angle $\varphi_1$, and
- - the circle $c_2$ and the straight line are connected with identical slope at an angle $(\varphi_2$, wherein

- the dorsal side model contains a definition of a circle and a straight line connected with identical slope, and wherein
- the final outline is composed of a ventral outline represented by a ventral curve $y_{ventral}(x)$ and of a dorsal outline represented by a dorsal curve $y_{dorsal}(x)$, wherein the ventral curve $y_{ventral}(x)$ is obtained by fitting the ventral model to the initial outline on the ventral side of the embryo, and wherein the dorsal curve $y_{dorsal}i(x)$ is obtained by fitting the dorsal model to the initial outline on the dorsal side of the embryo.

5. Method according to claim 4, wherein fitting the ventral model to the initial outline on the ventral side of the embryo includes providing a plurality of different initial value sets for the parameters $x_0, y_0, x_1, y_1, r_0, r_2, a, \varphi_1$ and $\varphi_2$ and carrying out the fitting for each initial value set.

6. Method according to claim 4 or 5, wherein identifying the L landmarks $l_{ij}$ (26) in a digital embryo image $e_i$ comprises for that digital embryo image $e_i$:

- finding pixels of minimum brightness in the tail of the embryo by finding the pixel with minimum brightness in each vertical pixel column of the tail starting at a starting point $(x_{tail}, y_{tail})$ of the tail and ending at a maximum point $(x_{max}, y_{max})$ of the tail, wherein

- - each vertical pixel column is bounded by the ventral curve $y_{ventral}(x)$ and by the dorsal curve $y_{dorsal}(x)$, wherein
- - from the ventral curve $y_{ventral}(x)$ to the dorsal curve $y_{dorsal}(x)$ the first 35% of the pixels are omitted and from the dorsal curve $y_{dorsal}(x)$ to the ventral curve $y_{ventral}(x)$ the first 20% of pixels are omitted, and wherein
- - based on the pixels with minimum brightness a straight line linear regression is calculated, referred to as a yolk extension (14).

7. Method according to any one of the previous claims, wherein identifying the L landmarks $l_{ij}$ (26) in a digital embryo image $e_i$ comprises for that digital embryo image $e_i$:

- setting a center point of a yolk ball of the embryo,
- defining a plurality of lines starting at the center point of the yolk ball,
- for each line identifying a position of a brightness minimum referred to as a yolk ball outline point (20),
- based on the distribution of the yolk ball outline points (20), either

- - correcting the position(s) of one or more yolk ball outline points (20) and then calculating a corrected center point of the yolk ball based on the complete set of yolk ball outline points (20), or
- - calculating a corrected center point of the yolk ball using the identified yolk ball outline points (20), and

- setting the center point of the yolk ball equal to the corrected center point of the yolk ball.

8. Method according to any one of the previous claims, wherein identifying the L landmarks $l_{ij}$ (26) in a digital embryo image $e_i$ comprises for that digital embryo image $e_i$:

- defining a rectangle in the digital embryo image $e_i$ having the coordinates in a coordinate system of the digital embryo image $e_i$: $(x_{left}, y_{left})$, $(x_{cont}, y_{left})$, $(Xcont, y_{top})$ and $(x_{left}, y_{top})$, wherein the coordinates are taken from the following points in the digital embryo image $e_i$:

- - $(x_{left}, y_{left})$: front end of the embryo,
- - $(x_{cont}, y_{cont})$: contact point of head and yolk ball, and
- - $(x_{top}, y_{top})$: top most point of the embryo,

- identifying the outline of a bright portion of the rectangle using a threshold calculation, referred to as a cerebellum outline (22), and
- identifying a position of the maximum distance between the of the cerebellum outline (22) and the dorsal curve $y_{dorsal}(x)$.

9. Method according to any one of the previous claims, wherein identifying the L landmarks $l_{ij}$ (26) in a digital embryo image $e_i$ comprises for that digital embryo image $e_i$:

- applying an anisotropic filter, such that lines in the digital embryo image $e_i$ oriented substantially parallel to a first direction are reduced and such that lines oriented substantially parallel to a second direction, which is orthogonal to the first direction, are amplified,
- finding pixels of minimum brightness in the tail of the embryo by finding the pixel with minimum brightness in each vertical pixel column of the tail starting at a starting point $(x_{tail}, y_{tail})$ of the tail and ending at a maximum point $(x_{max}, y_{max})$ of the tail, wherein

- - each vertical pixel column is bounded by the dorsal curve $y_{doral}(x)$ and by the yolk extension (14),
- - from the dorsal curve $y_{dorsal}(x)$ to the yolk extension (14) the first 30 % of the pixels are omitted, and from the yolk extension to the dorsal curve $y_{dorsal}(x)$ the first 45% of pixels are omitted, and wherein
- - based on the pixels with minimum brightness a line is obtained, referred to as a notochord outline (24).

10. Method according to any one of the claims 2 to 9, wherein identifying the L landmarks $l_{ij}$ (26) in a digital embryo image $e_i$ comprises for that digital embryo image $e_i$:

- defining at least one point in the ventral curve $y_{ventral}(x)$ as a landmark (26), and/or
- defining at least one point in the dorsal curve $y_{dorsal}(x)$ as a landmark (26), and/or
- defining at least one point in the yolk extension (14) as a landmark (26), and/or
- defining at least one point in the cerebellum outline (22) as a landmark (26), and/or
- defining at least one yolk ball outline point (20) as a landmark (26), and/or
- defining at least one point in the notochord outline (24) as a landmark (26).

11. Method according to anyone of the preceding claims, further comprising the initial step of obtaining a reference embryo image re, wherein the reference embryo image re comprises L reference landmarks $rl_j$ (28), wherein each reference landmark $rl_j$ (28) is obtained by calculating the mean of respective landmarks $l_{kj}$ (26) of a set of E' of digital embryo images $e'_k$, wherein E' is a natural number.

12. Method according to claim 11, wherein after the initial step the method further comprises:

- identifying L landmarks $l_{ij}$ (26) in each digital embryo image $e''_m$ of a set of E'' digital embryo images $e''_m$ using the method according to any one of the claims 2 to 10, wherein E'' is a natural number,
- for each digital embryo image $e''_m$ of the set of E'' digital embryo images:

**EP 2 278 548 A1**

- - manually identifying a number of D domains in the digital embryo image $e''_m$ and
- - warping the digital embryo image $e''_m$ by translating the position of each landmark $l_{ij}$ (26) in the digital embryo image $e''_m$ into a position of a corresponding reference landmark $rl_j$ (28) of the reference embryo image re,

- obtaining a number D of domains in the reference embryo image re based on the position of the D domains in the warped digital embryo images $e''_m$.

**13.** Method according to claim 12, further comprising the step for each digital embryo image $e_i$ of the set of E digital embryo images:

- after warping the digital embryo image $e_i$ assigning each pixel in the warped digital embryo image $e_i$ to a domain based on the domain of the respective pixel in the reference embryo image re.

**14.** Computer program product, including computer readable instructions, which when loaded in the memory of a computer and executed by the computer urge the computer to carry out the method according any one of the previous claims.

**15.** System for computer aided automatically analysing a set of E digital embryo images $e_i$ comprising:

- an image generator adapted to obtain the set of E digital embryo images $e_i$, where E is a natural number,
- an image data processor adapted to process each digital embryo image $e_i$ of the set of E digital embryo images by:

- - identifying L landmarks $l_{ij}$ (26) in the digital embryo image $e_i$, wherein L is a natural number,
- - warping the digital embryo image $e_i$ by translating the position of each landmark $l_{ij}$ (26) in the digital embryo image $e_i$ into a position of a corresponding reference landmark $rl_j$ (28) of a reference embryo image re, and
- - evaluating the pixel values of the warped digital embryo image $e_i$.

Figure 1

Figure 2

Figure 3

Figure 4

Figure 5

Overview of embryo recognition and referencing tools

Figure 6a

Figure 6b

Figure 6c

Figure 6d

Figure 6e

Too low CFP

Embryo cut

EP 2 278 548 A1

Figure 7

(a)

(1) Check for number of pixels in rows / colums
   Find outer points and use for rotation → „horizontal"

(b)

(2) Middle line + Regression

(3) 9 Boxes deliver position of embryo

(c)

(4) Rotation / Reflexion

(d)

(5) Fine tuning, using regression on tail points    (e)

Figure 8

Disturbance
(e.g. dirt)

wrong
outline

Detection of characteristic points

- Special Histograms, Filtering, Erosion, Dilation, Hole Filling, etc. with extracted figure(!) → Histogram properties are changed
- Find first (last) value in each column
- Problems: Bad CFP pictures, holes, disturbances

→ Statistical Regression

Figure 9

Find candidates for minimum

Cascaded regression for outlier deletion

Quality control:

Repetition of regression with high quality examples

Figure 10

- Iterative design
- Choose Center, generate straight line, filter, search brightness minimum

New center

Repeat

Improve center
Improve yolk

- Plausibility: Diff (Center – Yolk Points)
  → IF difference too small (big)
       THEN  new calculation
- Filtering of differences
- Complete new calculation

Figure 11

Figure 12

Figure 13

Comparison of projection methods for analysing transgene activity in zebrafish embryos

EP 2 278 548 A1

Figure 14

EP 2 278 548 A1

Europäisches
Patentamt
European
Patent Office
Office européen
des brevets

**EUROPEAN SEARCH REPORT**

Application Number

EP 09 00 9436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ÉVA KALMÁR: "Analysis of the cis-regulatory structure of develpmentally regulated genes in zebrafish embryo"[Online] 5 March 2009 (2009-03-05), pages 1-150, XP002563226 Combined Faculties fo rthe Natural Sciences and for Mathematics of the Ruperto-Carola University of Heidelberg, Germany Retrieved from the Internet: URL:http://www.google.de/url?sa=t&source=web&ct=res&cd=1&ved=0CA8QFjAA&url=http%3A%2F%2Farchiv.ub.uni-heidelberg.de%2Fvolltextserver%2Fvolltexte%2F2009%2F9443%2Fpdf%2FDissertation_Eva_Kalmar.pdf&ei=TRZPS_7pGMHy-Qb_04zOCA&usg=AFQjCNHOr-HEPQHlJPrT-vlgjVHmOTocPg&sig2=gJlqR5lwl_b6mWIxm1ObtA> [retrieved on 2010-01-13] * page 95 - page 96 * ----- | 1-15 | INV. G06T7/00 |
| Y | EP 1 772 825 A (ESAOTE SPA [IT]) 11 April 2007 (2007-04-11) * abstract * * paragraph [0001] * ----- | 1-15 | **TECHNICAL FIELDS SEARCHED (IPC)** G06T |
| A | EP 1 780 672 A (BRACCO IMAGING SPA [IT]) 2 May 2007 (2007-05-02) * abstract * ----- | 1-15 | |
| A | US 2007/269107 A1 (IWAI YOSHIAKI [JP] ET AL) 22 November 2007 (2007-11-22) * abstract * ----- | 1-15 | |

The present search report has been drawn up for all claims

| Place of search | Date of completion of the search | Examiner |
|---|---|---|
| Berlin | 15 January 2010 | dos Santos, Luís |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

63

**EP 2 278 548 A1**

## ANNEX TO THE EUROPEAN SEARCH REPORT
## ON EUROPEAN PATENT APPLICATION NO.

EP 09 00 9436

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2010

| Patent document cited in search report | | Publication date | Patent family member(s) | | Publication date |
|---|---|---|---|---|---|
| EP 1772825 | A | 11-04-2007 | NONE | | |
| EP 1780672 | A | 02-05-2007 | CN | 101297321 A | 29-10-2008 |
| | | | WO | 2007048794 A2 | 03-05-2007 |
| | | | JP | 2009512527 T | 26-03-2009 |
| US 2007269107 | A1 | 22-11-2007 | JP | 2008077626 A | 03-04-2008 |

EPO FORM P0459

For more details about this annex : see Official Journal of the European Patent Office, No. 12/82

64